# EUROPEAN PATENT APPLICATION

(11) **EP 4 678 354 A1**
(43) Date of publication of application: **14.01.2026**
(21) Application number: 24767113.4
(22) Date of filing: 04.03.2024
(51) Int. Cl.: B25J 15/04, B25J 13/08, B25J 15/10, B25J 19/06

(54) **CONTROL SYSTEM OF ROBOT, CONTROL PROGRAM OF ROBOT, AND MANAGEMENT SYSTEM OF ROBOT**

(30) Priority: 06.03.2023 JP 2023034053; 10.04.2023 JP 2023063567; 17.04.2023 JP 2023067106; 19.05.2023 JP 2023083462; 26.05.2023 JP 2023087305; 29.05.2023 JP 2023088254; 07.06.2023 JP 2023094427; 27.06.2023 JP 2023105298; 10.07.2023 JP 2023113331
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2024/008072
(87) International publication number: WO 2024/185745

(57) **Abstract**

A control system of a robot including a gripping portion that is detachably mounted on an arm portion of the robot and attached for a main purpose of gripping a target, and one or more robot tools that are detachable at the arm portion in accordance with a type of work different from the gripping of the gripping portion and execute work corresponding to the type of work, includes: a determination portion that determines a type of work for the target; and a control portion that controls an operation in which, in a case where the type of work determined by the determination portion meets the main purpose, the gripping portion is mounted on the arm portion, and in a case where the determination result of the determination portion indicates a type of work other than that of the main purpose, the robot tool is mounted on the arm portion, and controls an operation corresponding to the type of work.

## Description

### Technical Field

The present disclosure relates to a control system of a robot, a control program of a robot, and a management system of a robot.

### Background Art

In production lines of factories, humanoid robots for automatically performing work are used. Japanese Patent Application Laid-Open No. 2019-093506 describes controlling a humanoid robot's attitudes.

In addition, WO2011/001569 discloses a robot arm having a plurality of joints that is driven by an elastic actuator, the robot arm being controlled by a hand support member that is disposed at a hand portion of the robot arm and contacts a support surface to support the robot arm, and a control portion that controls a contact force between the hand support member and the support surface and simultaneously controls a position and an attitude of the hand portion of the robot arm.

### SUMMARY OF INVENTION

### Technical Problem

However, in the picking work in a warehouse by humanoid robots, for example, when cargo (shampoo, conditioner, cosmetics, toothpaste, cup ramen, confectionery bag, and the like having different shapes, weights, hardnesses, and breakabilities) is picked up from a shelf on which the cargo is displayed, and housed and packed in a predetermined package (box or the like), the above tasks currently rely on human effort.

In addition, even in a case where a finger type structure is applied as a structure of the gripping portion of the robot, the fingers and arms move slowly, so that productivity is low. Furthermore, in a case where work of a type other than gripping cargo is executed, the gripping portion grips a necessary tool (for example, a drill, a screwdriver, or the like) to perform the work, and this is indirect work in which management and control of the gripping state are added. Therefore, control burdens may increase.

Furthermore, the gripping portion of the robot may need to be replaced with a different type of tool depending on the work target, but the replacement work may lead to a loss of work in the entire work including normal work (for example, unloading work, loading work, and the like).

Even in a case where the work is to be performed by replacing the gripping portion of the robot with a tool corresponding to the work content in accordance with the type of the work to be executed, the work of gripping heavy cargo and the work of turning a small screw by a screwdriver or the like need to be realized by controlling the same motor in the same control mode.

However, in a case where low-load detailed work is executed by controlling the motor in a control mode in which high-load work such as gripping and moving heavy cargo is executed, the work cannot be realized with necessary precision. In addition, in a case where high-load work is executed by controlling the motor in a control mode in which low-load work that requires precision, such as turning a small screw with a screwdriver or the like, is executed, the work cannot be efficiently performed.

In addition, since work contents of various types of work include work contents that do not require high accuracy but require high speed and work contents that may be slow but require high accuracy, it is difficult to realize appropriate work corresponding to the work content simply by switching the tool to be used in accordance with the work content.

In a case where the gripping portion of the robot is replaced with a tool corresponding to the work content to perform the work in accordance with the type of the work to be executed, various types of work can be efficiently executed.

However, in a case where a plurality of robots adjacent to each other execute work and robots executing work in which the arm movement is large are adjacent to each other, an arm of one robot may be brought into contact with an arm of the other robot, thereby interfering with the work being executed by the robot.

For example, in a case where two robots adjacent to each other that perform work of a type such as coating in which a coating material is sprayed onto a target using a spray gun perform the work, arms of the robots may be brought into contact with each other, and the work of one robot may interfere with the work of the other robot. In addition, for example, in a case where a robot that performs work of a type such as welding is present adjacent to a robot that performs work of a type such as painting, there may be a risk that the coating material is ignited by a spark of welding.

An object of the disclosure is to obtain a control system of a robot, a control program of a robot, and a management system of a robot capable of reducing control burdens by directly executing a plurality of types of work including gripping of cargo by a gripping portion.

An object of the disclosure is to obtain a control system of a robot, a control program of a robot, and a management system of a robot capable of reducing control burdens by directly executing a plurality of types of work.

An object of the disclosure is to obtain a control system of a robot and a control program of a robot capable of eliminating a work loss and reducing control burdens by directly executing a plurality of types of work.

An object of the disclosure is to provide a robot control system and a robot control program capable of appropriately executing various types of work having different work contents by using the same motor.

An object of the disclosure is to provide a robot control system and a robot control program capable of preventing the occurrence of a situation in which, in a case where a plurality of robots adjacent to each other execute work, the work executed by a certain robot interferes with the work of other adjacent robots.

### Solution to Problem

A control system of a robot according to the disclosure, the robot including a gripping portion that is detachably mounted on an arm portion of the robot and attached for a main purpose of gripping a target, and one or more robot tools that are detachable at the arm portion in accordance with a type of work different from the gripping of the gripping portion and execute work corresponding to the type of work, includes: a determination portion that determines a type of work for the target; and a control portion that controls an operation in which, in a case where the type of work determined by the determination portion meets the main purpose, the gripping portion is mounted on the arm portion, and in a case where the determination result of the determination portion indicates a type of work other than that of the main purpose, the robot tool is mounted on the arm portion, and controls an operation corresponding to the type of work.

According to the disclosure, the robot includes a gripping portion that is detachably mounted on an arm portion of the robot and attached for a main purpose of gripping a target, and one or more robot tools that are detachable at the arm portion in accordance with a type of work different from the gripping of the gripping portion and execute work corresponding to the type of work.

The determination portion determines a type of work for the target, and the control portion controls an operation in which, in a case where the type of work determined by the determination portion meets the main purpose, the gripping portion is mounted on the arm portion, and in a case where the determination result of the determination portion indicates a type of work other than that of the main purpose, the robot tool is mounted on the arm portion, and controls an operation corresponding to the type of work.

Therefore, it is possible to reduce control burdens by directly executing a plurality of types of work including gripping of cargo by the gripping portion.

In the disclosure, the robot tool is mounted instead of the entire gripping portion.

In the disclosure, the robot tool is mounted instead of a part of the gripping portion.

In the disclosure, the gripping portion includes a plurality of finger portions, and a part of the gripping portion is on tip end sides of the finger portions.

In the disclosure, the robot tool is attached to a plurality of finger portions forming a part of the gripping portion, and can work in a state of being separated from the finger portion in a case where a type of work given to each robot tool is executed.

In the disclosure, the robot tool is connected to the finger portion with an extension bar, and the extension bar transmits an operation suitable for the type of work of the robot tool to the robot tool.

In the disclosure, the robot tool is detachable from the finger portion, and an operation thereof is controlled through wireless communication or wired communication.

In the disclosure, the determination portion makes a determination with information from a sensor portion carried on the gripping portion or the robot tool and including a camera that captures an image of the target to identify a type of the target, and a motion processing unit that specifies a position of the target.

A robot management system according to the disclosure that manages work mainly performed by a robot on which a plurality of robot tools are selectively mounted and which executes work corresponding to a type of work for a target, includes: a robot control device including a determination portion that determines a type of work for the target, and a first control portion that controls execution of work using the robot tool corresponding to the type of work determined by the determination portion, and transmits, in a case where the robot tool corresponding to the type of work is in short supply, a request notification for requesting the robot tool that is in short supply; and a moving body management server including a second control portion that receives the request notification and controls an operation of a moving body that carries a necessary robot tool at a storage storing the robot tool and transports the robot tool to a work site of the robot.

According to the disclosure, the robot control device controls execution of work using the robot tool corresponding to the type of work determined by the determination portion, and transmits, in a case where the robot tool corresponding to the type of work is in short supply, a request notification for requesting the robot tool that is in short supply.

The moving body management server receives the request notification and controls an operation of a moving body that carries a necessary robot tool at a storage storing the robot tool and transports the robot tool to a work site.

Therefore, it is possible to continue the work without reducing the work efficiency of the robot. For example, the robot basically holds robot tools, but even in a case where irregular work occurs, the robot can continue the work without leaving the work site by cooperating with the moving body.

In the disclosure, the moving body is a flying body capable of self-sustaining flying based on identification information of the robot that has transmitted the request notification, position information of the work site of the robot, and type information of the necessary robot tool.

In the disclosure, the robot tool has a sensor portion including a camera that captures an image of the target to identify a type of the target, and a motion processing unit that specifies a position of the target, and acquires information required for the flying body to fly in a self-sustaining manner from the sensor portion.

The flying body according to the disclosure can acquire the information required for the flying body to fly in a self-sustaining manner from the sensor portion carried on the robot tool.

A control system of a robot according to the disclosure includes: a determination portion that determines a type of work to be executed on a target; a sensor portion that identifies the target and specifies a position of the target; and a control portion that selects a robot tool necessary for the type of work determined by the determination portion to mount the robot tool on a robot, and causes the robot to execute work corresponding to the type of work on a basis of detection information detected by the sensor portion, and
in a case where the type of work determined by the determination portion is special work that requires a predetermined degree of precision in a three-dimensional relative position between the robot tool and the target changing over time from start to end of work, the control portion acquires common reference information for the robot tool and the target to execute the work while monitoring the relative position between the robot tool and the target changing over time.

According to the disclosure, in a case where the type of work determined by the determination portion is special work that requires a predetermined degree of precision in a three-dimensional relative position between the robot tool and the target changing over time from start to end of work, the control portion acquires common reference information for the robot tool and the target to execute the work while monitoring the relative position between the robot tool and the target changing over time.

This ensures precision management of the special work that requires a predetermined degree of precision.

The sensor portion includes a camera that captures an image of the target to identify a type of the target, and a motion processing unit that specifies a position of the target.

In the disclosure, the special work is three-dimensional shaping process work, and the reference information is original position information of x-y-z coordinates set in a shaping stage to which a three-dimensional shaping material is supplied.

A control system of a robot according to the disclosure includes: a determination portion that determines a type of work to be executed on a target; a sensor portion that identifies the target and specifies a position of the target; and a control portion that selects a robot tool necessary for the type of work determined by the determination portion to mount the robot tool on a robot, and causes the robot to execute work corresponding to the type of work on a basis of detection information detected by the sensor portion, in a case where the type of work determined by the determination portion is a three-dimensional shaping process using a three-dimensional shaping device, a robot tool having a function of supplying a three-dimensional shaping material as a raw material of the target to a shaping stage is selected as the robot tool, and the control portion executes the work while monitoring, as common reference information for the robot tool and the target, a relative position between the robot tool and the shaping stage changing over time during a course of the three-dimensional shaping process.

A control system of a robot according to the disclosure that causes a robot tool necessary for a type of work to be executed on a target to be mounted on a robot and causes the robot to execute work corresponding to the type of work, includes: a selection portion that selects a robot tool on which a plurality of attribute information detection portions capable of detecting each of a plurality of pieces of attribute information obtainable from the target are mounted; an attribute information acquisition portion that acquires attribute information of a type with which the target can be identified by the plurality of attribute information detection portions under an environmental condition in which a plurality of the targets are mixed; and a position specification portion that specifies a position of the target for which the type of work has been designated, by collating the attribute information of the target for which the type of work has been designated with the attribute information acquired by the attribute information acquisition portion.

In the disclosure, the attribute information acquisition portion acquires attribute information of a type with which the target can be identified
under an environmental condition in which a plurality of the targets are mixed.

According to the disclosure, the selection portion selects a robot tool on which a plurality of attribute information detection portions capable of detecting each of a plurality of pieces of attribute information obtainable from the target are mounted. The attribute information acquisition portion acquires attribute information of a type with which the target can be identified by the plurality of attribute information detection portions under an environmental condition in which a plurality of the targets are mixed. The position specification portion specifies a position of the target for which the type of work has been designated, by collating the attribute information of the target for which the type of work has been designated with the attribute information acquired by the attribute information acquisition portion. Therefore, it is possible to reduce control burdens by directly executing a plurality of types of work.

**In** the disclosure, the attribute information detection portion detects attribute information for each of sight, hearing, smell, touch, and taste, and identifies the target by a combination of a plurality of pieces of attribute information.

In the disclosure, the type of work is picking work of picking designated waste from a housing portion in which a plurality of types of recyclable waste and a plurality of types of harmful waste are mixed.

In the disclosure, the robot includes a camera that captures an image of the target to identify a type of the target, and a motion processing unit that specifies a position of the target.

A control system of a robot according to the disclosure includes: a process control device that can select a robot tool from a plurality of robot tools classified into a plurality of inspection tools for inspecting a state of a target and a plurality of work tools that perform work on the target, and mount the selected robot tool on a robot, and that causes the robot to execute work based on the robot tool, and the process control device includes an information acquisition portion that acquires information on the target by mounting a robot tool belonging to the inspection tools, a deciding portion that decides a work process on a basis of the information acquired by the information acquisition portion, and an execution control portion that replaces the robot tool belonging to the inspection tools with a robot tool belonging to the work tools to execute work in accordance with the work process decided by the deciding portion.

According to the disclosure, the information acquisition portion acquires information on the target by mounting a robot tool belonging to the inspection tools. The deciding portion decides a work process on a basis of the information acquired by the information acquisition portion. The execution control portion replaces the robot tool belonging to the inspection tools with a robot tool belonging to the work tools to execute work in accordance with the work process decided by the deciding portion.

That is, there is no pre-existing work process sequence, and the robot can automatically perform a series of work including inspecting a target, specifying a failure site, deciding a work process, and executing the work. Therefore, it is possible to reduce control burdens by directly executing a plurality of types of work.

In the disclosure, the work is repair work for the target, and the deciding portion specifies a failure site of the target on a basis of the information acquired by the information acquisition portion, analyzes failure information including a failure state, a relationship with past failures, components required for repair, and a repair time, and decides a work process on a basis of the failure information.

In the disclosure, the robot includes a camera that captures an image of the target to identify a type of the target, and a motion processing unit that specifies a position of the target.

A control system of a robot according to the disclosure includes: a transport control portion that causes a transport device to move between a storage base that stores a target and a plurality of types of tools that can be mounted on a robot and a work space of the robot; a robot control portion that controls the robot existing in the work space by using a tool mounted on the robot disposed in the work space; a normal work instruction portion that instructs the transport control portion to move the target using the transport device for a purpose of normal work of the robot on the target by the robot control portion; an acquisition portion that acquires replacement request information of the tool from the robot control portion; and an interruption work instruction portion that instructs the transport control portion to transport the tool by interrupting the normal work in a case where the acquisition portion acquires the replacement request information of the tool.

According to the disclosure, the transport control portion that causes a transport device to move between a storage base that stores a target and a plurality of types of tools that can be mounted on a robot and a work space of the robot, and the robot control portion that controls the robot existing in the work space by using a tool mounted on the robot disposed in the work space operate in cooperation with each other.

The normal work instruction portion instructs the transport control portion to move the target using the transport device for a purpose of normal work of the robot on the target. During the normal work, in a case where the acquisition portion acquires the replacement request information of the tool from the robot control portion, the interruption work instruction portion instructs the transport control portion to interrupt the normal work and transport the tool.

Therefore, it is possible to eliminate a work loss and reduce control burdens by directly executing a plurality of types of work.

In the disclosure, the instruction given to the transport control portion by the interruption work instruction portion includes an instruction to take out the designated tool from the storage base and transport the tool to the work space, and an instruction to transport the tool removed by the robot to the storage base and store the tool.

In the disclosure, the normal work of the robot on the target in the work space includes unloading work of unloading the target from the storage base and loading work of loading the target into the storage base.

In the disclosure, the work of the transport device is executed by the robot or another robot in a category of the normal work.

In the disclosure, the robot includes a camera that captures an image of the target to identify a type of the target, and a motion processing unit that specifies a position of the target.

The camera is used to identify the captured target (hereinafter, may be referred to as cargo) based on the captured image information. That is, the camera serves to acquire information for specifying the type (shape, size, hardness, and the like) of the target.

The motion processing unit (MoPU) outputs, as position information, vector information of the movement of a point indicating the position where the target is present along a predetermined coordinate axis together with motion information. That is, the motion information output from the MoPU includes only information indicating the movement (moving direction and moving speed) of a center point (or center of gravity) of the target on the coordinate axes (x-axis, y-axis, and z-axis). That is, it is possible to precisely guide the trajectory when the gripping portion approaches the target.

A robot control system according to the disclosure including a gripping portion that is detachably mounted on an arm portion of a robot and attached for a main purpose of gripping a target, one or more robot tools that are configured to be detachable at the arm portion to execute work of a type different from the gripping of the target, a motor for operating the gripping portion and the robot tool, and a drive device for driving the motor, includes:
a determination portion that determines a type of work to be executed on the target; and
a control portion that performs control to mount the gripping portion on the arm portion in a case where the type of work determined by the determination portion is gripping of the target, and to mount a robot tool corresponding to the type of work among the one or more robot tools on the arm portion in a case where the type of work determined by the determination portion is a type of work other than gripping of the target, and controls the drive device in a control mode corresponding to the type of work determined by the determination portion to execute work corresponding to the type of work on the target.

According to the disclosure, the determination portion determines a type of work to be executed on the target, and the control portion executes control to mount the gripping portion on the arm portion in a case where the type of work determined by the determination portion is gripping of the target, and to mount a robot tool on the arm portion in a case where the type of work determined by the determination portion is a type of work other than gripping of the target.

In the disclosure, the control portion controls the drive device in a control mode corresponding to the type of work determined by the determination portion to execute work corresponding to the type of work on the target.

Therefore, according to the disclosure, it is possible to appropriately execute various types of work having different work contents by using the same motor.

Furthermore, in the robot control system according to the disclosure, the control mode may include a high-load work control mode and a precision work control mode, and
the control portion may control the drive device in the high-load work control mode in a case where it is determined that the work to be executed on the target is high-load work, and control the drive device in the precision work control mode in a case where it is determined that the work to be executed on the target is low-load work.

According to the disclosure, the control portion switches the control mode in the control of the drive device to either the high-load work control mode or the precision work control mode in accordance with the load amount of work to be executed on the target, so that the work can be executed in the control mode matching the load amount of the work.

Furthermore, in the robot control system according to the disclosure, the determination portion estimates a work load in a case where the work is executed on the target, and
the control portion controls the drive device in a control mode corresponding to the type of work determined by the determination portion and the work load to execute work corresponding to the type of work on the target.

According to the disclosure, since the work load that is the load amount of the work on the target is estimated in accordance with not only the type of work but also the characteristics of the target such as size and weight, the drive device can be controlled in a control mode corresponding to the actual work load to execute the work.

Furthermore, in the robot control system according to the disclosure, the determination portion may determine, on a basis of information from a sensor portion carried on the gripping portion or the robot tool and including a camera that captures an image of the target to identify a type of the target, and a motion processing unit that specifies a position of the target, a type of work to be executed on the target and a work load in a case where the work is executed.

In addition, in the robot control system according to the disclosure, the control portion may select any control mode from a position control mode, a speed control mode, or a torque control mode in accordance with the type of work determined by the determination portion to control the drive device.

Furthermore, in the robot control system according to the disclosure, the control portion may change a resolution of a pulse signal from a detector that detects a rotation operation of the motor by changing a multiplication number in a case where the pulse signal from the detector is multiplied in the drive device in accordance with the type of work determined by the determination portion, to control the drive device.

In addition, in the robot control system according to the disclosure, the robot tool may be mounted on the arm portion instead of the entire gripping portion.

Furthermore, in the robot control system according to the disclosure, the robot tool may be mounted on the arm portion instead of a part of the gripping portion.

In this case, the gripping portion may include a plurality of finger portions, and a part of the gripping portion may form tip end portions of the finger portions.

A robot control system according to the disclosure for controlling a robot including a gripping portion that is detachably mounted on an arm portion of the robot and attached for a main purpose of gripping a target, and one or more robot tools that are configured to be detachable at the arm portion to execute work of a type different from the gripping of the target, includes:
a determination portion that determines a type of work to be executed on the target;
an acquisition portion that acquires information on a type of work that is about to be executed or being executed by other adjacent robots; and
a control portion that performs control so that the type of work determined by the determination portion is not executed on the target in a case where it is determined that the type of work determined by the determination portion is a type of work that cannot be executed adjacent to the type of work of other adjacent robots acquired by the acquisition portion.

According to the disclosure, the determination portion determines a type of work to be executed on the target, and the control portion executes control to mount the gripping portion on the arm portion in a case where the type of work determined by the determination portion is gripping of the target, and to mount a robot tool on the arm portion in a case where the type of work determined by the determination portion is a type of work other than gripping of the target.

In the disclosure, in a case where it is determined that the type of work determined by the determination portion is a type of work that cannot be executed adjacent to the type of work of other adjacent robots acquired by the acquisition portion, the control portion performs control so that the type of work determined by the determination portion is not executed on the target.

Therefore, according to the disclosure, it is possible to prevent the occurrence of a situation in which, in a case where a plurality of robots adjacent to each other execute work, the work executed by a certain robot interferes with the work of other adjacent robots.

Furthermore, in the robot control system according to the disclosure, the control portion performs control so that a type of work other than the type of work determined by the determination portion is executed on the target in a case where it is determined that the type of work determined by the determination portion is a type of work that cannot be executed adjacent to the type of work of other adjacent robots acquired by the acquisition portion.

Furthermore, in the robot control system according to the disclosure, in a case where it is determined that the type of work determined by the determination portion is a type of work that cannot be executed adjacent to the type of work of other adjacent robots acquired by the acquisition portion, the control portion moves the robot from a current position so that the type of work of other adjacent robots and the type of work to be executed by the robot are not a combination of the types of work that cannot be executed adjacent to each other.

According to the disclosure, without changing the type of work to be executed by a certain robot, it is possible to prevent the occurrence of a situation in which the work executed by the certain robot interferes with the work of other adjacent robots.

In the robot control system according to the disclosure, a combination of types of work that cannot be simultaneously executed by two adjacent robots is set on a basis of sizes of work ranges of the types of work.

In addition, in the robot control system according to the disclosure, a combination of types of work that cannot be simultaneously executed by two adjacent robots is set on a basis of safety reason.

In addition, in the robot control system according to the disclosure, information on a combination of types of work that cannot be simultaneously executed by two adjacent robots is stored in each of a plurality of robots.

According to the disclosure, only by acquiring information on a type of work to be executed by adjacent robots through direct communication between the robots without the need for a management server, it is possible to prevent the occurrence of a situation in which the work executed by a certain robot interferes with the work of other adjacent robots.

In addition, in the robot control system according to the disclosure, information on a combination of types of work that cannot be simultaneously executed by two adjacent robots may be stored in a management server that manages operations of a plurality of robots, and
the management server may control the operations of the plurality of robots so that two adjacent robots do not execute types of work that cannot be simultaneously executed, respectively.

According to the disclosure, by managing the types of work to be executed by the plurality of robots, respectively, in the management server, it is possible to prevent the occurrence of a situation in which the work executed by a certain robot interferes with the work of other adjacent robots.

Furthermore, in the robot control system according to the disclosure, the determination portion determines, on a basis of information from a sensor portion carried on the gripping portion or the robot tool and including a camera that captures an image of the target to identify a type of the target, and a motion processing unit that specifies a position of the target, a type of work to be executed on the target.

The control system of a robot according to the disclosure causes a computer to operate as the determination portion and the control portion of the control system of a robot.

The control system of a robot according to the disclosure causes a computer to operate as the normal work instruction portion, the acquisition portion, and the interruption work instruction portion of the management server.

The control system of a robot according to the disclosure causes a computer to operate as the selection portion, the attribute information acquisition portion, and the position specification portion of the control system of a robot.

The control system of a robot according to the disclosure causes a computer to operate as the selection portion, the attribute information acquisition portion, and the position specification portion of the control system of a robot.

Note that the above summary does not enumerate all of the necessary features of the disclosure. A subcombination of these feature groups may also be included in the disclosure. Advantageous Effects of Invention

As described above, according to the disclosure, it is possible to reduce control burdens by directly executing a plurality of types of work including gripping of cargo by the gripping portion.

According to the disclosure, it is possible to reduce control burdens by directly executing a plurality of types of work.

According to the disclosure, it is possible to reduce control burdens by directly executing a plurality of types of work.

As described above, according to the disclosure, it is possible to obtain an effect of appropriately executing various types of work having different work contents by using the same motor.

As described above, according to the disclosure, it is possible to obtain an effect of preventing the occurrence of a situation in which, in a case where a plurality of robots adjacent to each other execute work, the work executed by a certain robot interferes with the work of other adjacent robots.

### BRIEF DESCRIPTION OF DRAWINGS

Fig. 1 is a front view of a humanoid robot according to a first embodiment.
Fig. 2 is a side view of the humanoid robot according to the first embodiment.
Fig. 3 is a front view of a palm side of a gripping portion according to the first embodiment.
Fig. 4A is a front view of robot tools stored in a holder according to the first embodiment.
Fig. 4B is a front view showing a state of work performed by the robot tool according to the first embodiment.
Fig. 4C is a front view showing a state of work performed by the robot tool according to the first embodiment.
Fig. 4D is a front view showing a state of work performed by the robot tool according to the first embodiment.
Fig. 5 is a view schematically showing an example of a functional configuration of the humanoid robot according to the first embodiment.
Fig. 6 is a flowchart showing a procedure of gripping control for a case where cargo is gripped by the gripping portion in conjunction with an overall operation of the humanoid robot.
Fig. 7 is a control flowchart showing details of a robot tool application process sub-routine.
Fig. 8A is a front view of a gripping portion according to a second embodiment.
Fig. 8B is a table showing a list of types of work of the gripping portion according to the second embodiment.
Fig. 9 is a front view of a hand tool 50 according to a third embodiment.
Fig. 10A is a side view showing a state before approach, in which a screw tightening process is executed by approaching an electronic component installed in a stuffed toy type AI robot as work according to the third embodiment.
Fig. 10B is a side view showing a state after approach, in which the screw tightening process is executed by approaching the electronic component installed in the stuffed toy type AI robot as work according to the third embodiment.
Fig. 11 is a side view showing a first joint portion that moves on a substrate by a remote-control operation (wireless communication) according to a modification example of the third embodiment.
Fig. 12 is an overhead view showing a work site where a humanoid robot is working, and a flying body that is movable around the work site.
Fig. 13 is a perspective view of a flying body according to a fourth embodiment.
Fig. 14 is a control flowchart showing details of a robot tool application process sub-routine.
Fig. 15 is a flowchart showing a robot tool transport control routine according to the first embodiment.
Fig. 16A is a process view showing a shaping work process in a three-dimensional shaping device 460 according to an example to which a fifth embodiment is applied.
Fig. 16B is a process view showing a shaping work process in the three-dimensional shaping device 460 according to the example to which the fifth embodiment is applied.
Fig. 16C is a process view showing a shaping work process in the three-dimensional shaping device 460 according to the example to which the fifth embodiment is applied.
Fig. 16D is a process view showing a shaping work process in the three-dimensional shaping device 460 according to the example to which the fifth embodiment is applied.
Fig. 17A is a work process view in a case where a humanoid robot 1 executes the work process of Figs. 16A to 16C.
Fig. 17B is a work process view in a case where the humanoid robot 1 executes the work process of Figs. 16A to 16C.
Fig. 18 is a front view showing a form of sorting and picking work according to a sixth embodiment.
Fig. 19 is a functional block diagram in an information processing device for executing the sorting and picking work according to the sixth embodiment.
Fig. 20 is a control flowchart showing a process procedure of the sorting and picking work according to the sixth embodiment.
Fig. 21 is a perspective view showing a vehicle engine room according to a modification example of the sixth embodiment.
Fig. 22A is a front view showing a work state of a humanoid robot according to a seventh embodiment, and shows an inspection and repair process decision phase.
Fig. 22B is a front view showing a work state of the humanoid robot according to the seventh embodiment, and shows a repair process execution phase.
Fig. 23 is a functional block diagram specialized for control of repair work that is executed by an information processing device of the humanoid robot according to the seventh embodiment.

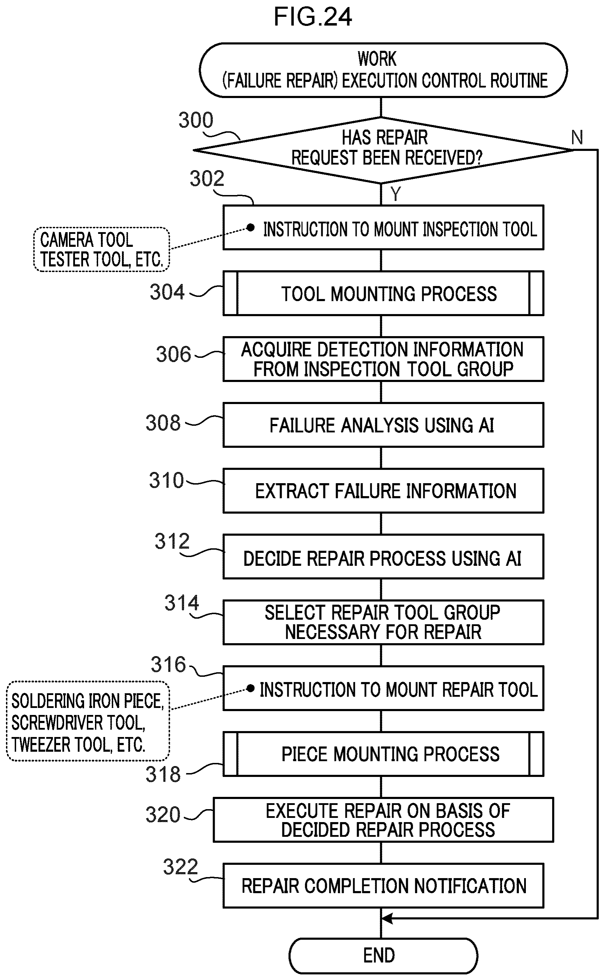

Fig. 24 is a flowchart showing a flow of the control of repair work that is executed by the information processing device of the humanoid robot according to the seventh embodiment.
Fig. 25A is a perspective view of a storage base that is a warehouse of a distribution center according to an eighth embodiment and stores cargo as a target.
Fig. 25B is an enlarged view of the warehouse of the distribution center according to the eighth embodiment, which shows a cargo storage state.
Fig. 25C is an enlarged view of the warehouse of the distribution center according to the eighth embodiment, which shows a tool storage state.
Fig. 26 is a functional block diagram in a case where control is performed with the cooperation of a robot with a transport device, which is executed by a storage base management server according to the eighth embodiment.
Fig. 27 is a flowchart showing a work instruction control main routine according to the eighth embodiment.
Fig. 28 is a view showing a specific example of a configuration for controlling operations of a gripping portion 20 and a robot tool 21EX by a control portion 142.
Fig. 29 is a view showing an example of an aspect in which a control mode is set for each type of work as a control mode selection table.
Fig. 30 is a flowchart showing a control procedure in a case where work is executed on cargo 100 by a gripping portion 20 or a robot tool 21EX according to a ninth embodiment.
Fig. 31 is a flowchart showing a control procedure in a case where work is executed on cargo 100 by a gripping portion 20 or a robot tool 21EX according to a tenth embodiment.
Fig. 32 is a view showing an aspect in which three humanoid robots 1A to 1C are about to execute work on three pieces of cargo 100 placed on one table, respectively.
Fig. 33 is a view showing an aspect in which each of the humanoid robots 1A to 1C transmits and receives data to and from other adjacent humanoid robots 1 via a radio communication line.
Fig. 34 is a view showing an example of a work range setting table in which a work range is set for each type of work.
Fig. 35 is a view showing an example of an adjacent work prohibition table in which a combination of types of work that cannot be simultaneously executed by two adjacent humanoid robots 1 is registered.
Fig. 36 is a view showing a configuration in which operations of the plurality of humanoid robots 1A to 1C are managed by a management server 980.

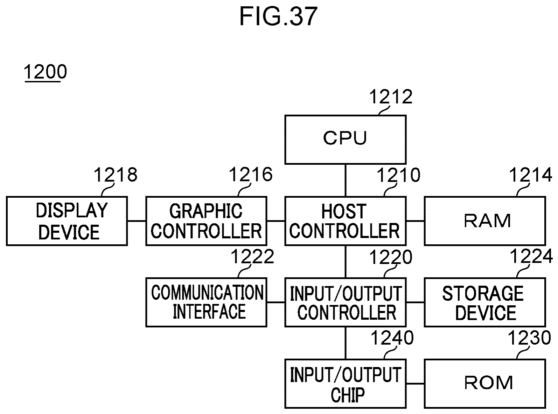

Fig. 37 is a view schematically showing an example of computer hardware functioning as an information processing device.

### DESCRIPTION OF EMBODIMENTS

Hereinafter, embodiments will be described, but the following embodiments are not intended to be limiting. In addition, not all of the combinations of features described in the embodiments are essential to the solutions of the disclosure.

### (First Embodiment)

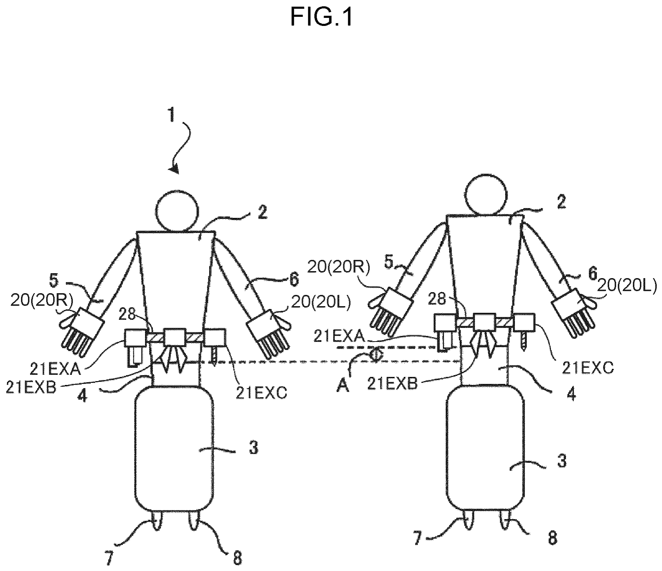

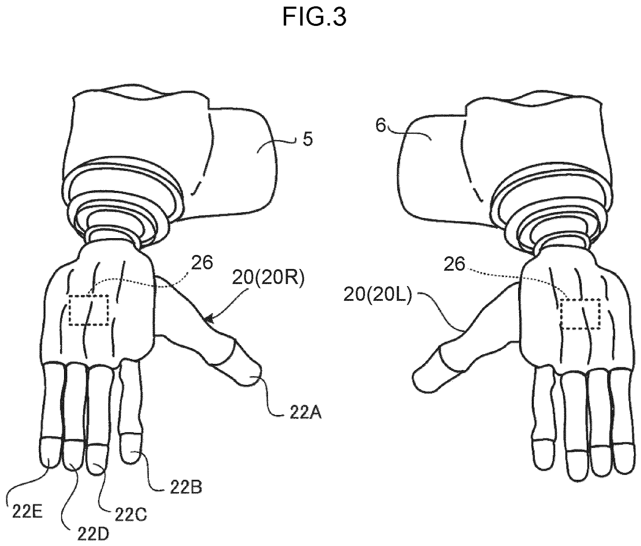

Fig. 1 is a front view of a humanoid robot 1 according to a first embodiment. As shown in Fig. 1, the humanoid robot 1 according to the first embodiment includes an upper body portion 2, a leg portion 3, and a connecting portion 4 that turnably connects the upper body portion 2 to the leg portion 3. The humanoid robot 1 is disposed in, for example, a factory's production line, and performs work on a target (fallen object or the like) on a line including a shelf on which cargo 100 (see Fig. 3) or the like as a picking target is displayed, or on a floor. Note that the work includes, in addition to picking for gripping the cargo 100 from the shelf, packing for housing the gripped cargo 100 in a predetermined housing (cardboard or the like), painting of the gripped work target, drilling on the work target, screw tightening, and the like.

The upper body portion 2 has two arm portions 5 and 6. The arm portions 5 and 6 are turnably attached to the left and right of the upper body portion 2. Gripping portions 20L and 20R (to be described in detail later) for gripping cargo are attached to tip ends of the arm portions 5 and 6, respectively. In a case where the gripping portions 20L and 20R are not specified in the following description, the gripping portions 20L and 20R may be collectively referred to as the gripping portions 20. In addition, the number of the arm portions is not limited to two. One or three or more arm portions may be provided.

The robot control system according to the present embodiment includes not only the gripping portions 20 that are detachably mounted on the arm portions 5 and 6 of the humanoid robot 1 and attached for a main purpose of gripping cargo that is a target, but also one or more robot tools 21EX for executing work of a type different from the gripping of the cargo that are configured to be detachable at the arm portions 5 and 6.

In Fig. 1, three types of robot tools 21EXA to 21EXC are held by a holder of a belt 28. The robot tools 21EXA to 21EXC will be described later in detail.

The leg portion 3 has two wheels 7 and 8 attached to a lower portion of the leg portion 3, and is movable on a floor on which the humanoid robot 1 is disposed.

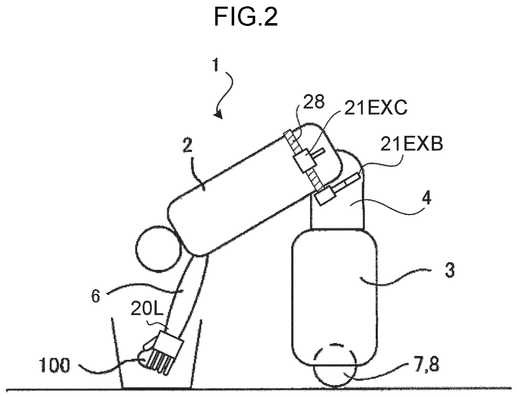

The connecting portion 4 turnably connects the upper body portion 2 and the leg portion 3. Therefore, the upper body portion 2 can be tilted forward and backward with respect to the leg portion 3. Therefore, in the humanoid robot 1 according to the first embodiment, as shown in Fig. 2, the upper body portion 2 can be tilted forward with respect to the leg portion 3 to pick up the cargo 100 placed on the shelf, cargo 100 placed on the floor, or cargo 100 dropped on the floor during the work.

The leg portion 3 has a balance function for preventing the humanoid robot 1 from falling when the upper body portion 2 tilts forward or backward with respect to the leg portion 3 or the humanoid robot 1 moves.

In addition, the connecting portion 4 has a function of changing a distance between the upper body portion 2 and the leg portion 3 as shown in Fig. 1. Therefore, the position of the upper body portion 2 in a vertical direction can be adjusted with respect to the leg portion 3 as indicated by the arrow A so as to match a height of a work stand in the production line.

In addition, the driving of the humanoid robot 1 according to the first embodiment is controlled by a control system 10 mounted inside the humanoid robot 1.

### (Structure of Gripping Portions 20)

As shown in Fig. 3, the gripping portions 20 attached to the tip ends of the arm portions 5 and 6 have a structure similar to that of a human hand (intelligent hand system). The gripping portions 20 are
rotatably attached to the arm portions 5 and 6, respectively. The gripping portions 20 are portions ahead of the wrists connected to the arm portions 5 and 6. The gripping portions 20 are detachable at the wrist portions, and can be replaced with the robot tools 21EX to be described later.

### (Gripping Portion 20)

As shown in Fig. 3, the gripping portion 20 according to the first embodiment includes a palm portion as a base portion corresponding to a so-called human palm, and five finger portions 22A, 22B, 22C, 22D, and 22E each including a plurality of joints are attached to the palm portion. In the first embodiment, the number of fingers of the gripping portion 20L is five, but finger structures having different numbers of fingers such as three fingers may be provided.

A palm sensor 26 is attached to the palm portion. A high-resolution camera included in the palm sensor 26 according to the first embodiment is used to identify what the captured cargo 100 is, for example, whether the cargo is a care product such as shampoo, conditioner, cosmetics, or toothpaste, or a food product such as cup ramen or a confectionery bag, on the basis of the captured image information.

In other words, the high-resolution camera serves to acquire information for specifying the type (shape, size, hardness, and the like) of the cargo 100.

Meanwhile, an MoPU included in the palm sensor 26 according to the first embodiment together with the high-resolution camera outputs, for example, at a frame rate of 1,000 frames/second or higher, motion information indicating the captured movement (in this case, the movement relative to the arm portions 5 and 6) of the cargo 100 from the images of the cargo 100 captured at a frame rate of 1,000 frames/second or higher. Note that the frame rate may be increased in a case where the cargo 100 being moved is detected, and the frame rate may be decreased in a case where a fixed object (cargo 100 that does not move) is detected.

The MoPU outputs, as motion information, vector information of the movement of a point indicating the position where the cargo 100 is present along a predetermined coordinate axis. That is, the motion information output from the MoPU does not include information required for identifying what the captured cargo 100 is (the care product or food described above), and includes only information indicating the movement (moving direction and moving speed) of a center point (or center of gravity) of the cargo 100 on the coordinate axes (x-axis, y-axis, and z-axis).

That is, it is possible to precisely guide the trajectory when the gripping portions 20 approach the cargo 100.

The information output from the palm sensor 26 including the high-resolution camera and the MoPU is supplied to an information processing device 14.

The information processing device 14 can specify the position of the cargo 100 with high precision from the information from the palm sensor 26 including the high-resolution camera and the MoPU, calculate the degree of spread of the finger portions 22A, 22B, and 22C at the time of gripping, the strength at the time of grabbing, the suction force by a suction pad 24, and the like, precisely control minute movements of the arm portions 5 and 6 and the gripping portion 20, and handle picking work for various pieces of cargo 100.

### (Robot Tool 21EX)

In the first embodiment, the main purpose is to grip the cargo 100 using the gripping portion 20 as a type of work for the cargo 100.

The type of work for the cargo 100 may not be gripping, but be another type of work (for example, painting, strength-enhanced gripping (special gripping), drilling with a drill, or the like).

In this case, it is also possible to grip tools corresponding to various types of work by the gripping portion 20 and cause the gripped tool to face the cargo 100. However, in a case where the same type of work is continuously executed, the burdens of maintenance and control (relative position control between the gripping portion and the gripped tool, and the like) of the gripping state are large.

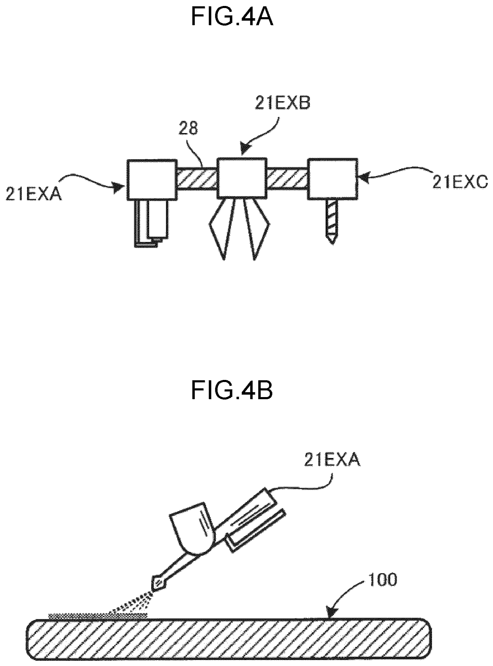

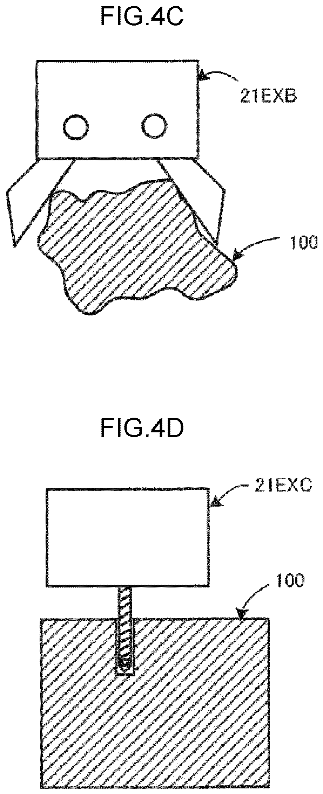

Therefore, in the first embodiment, a configuration is provided in which, instead of the gripping portion 20, the robot tool 21EX (in the first embodiment, three types of 21EXA, 21EXB, and 21EXC) is provided corresponding to the type of work for the cargo 100 as shown in Figs. 1 and 4, and the gripping portion 20 is replaced with the robot tool 21EX as necessary to execute the work corresponding to the type of work different from the gripping of the cargo 100.

### (Examples of Storage of Robot Tool 21EX)

As shown in Fig. 1, in the humanoid robot 1, the belt 28 is mounted on a lower portion (so-called waist position) of the upper body portion 2, and the holder that detachably holds each of the three robot tools 21EXA, 21EXB, and 21EXC is attached to the belt 28. In a case where each of the robot tools 21EXA, 21EXB, and 21EXC is not specified in the description, they are referred to as the robot tools 21EX.

Although three robot tools 21EX are shown in Fig. 1, the number of the robot tools 21EX may be one, two, or four or more, and the number of the robot tools may be determined in accordance with the attributes of the cargo 100 to be described later.

Figs. 4A to 4D show detailed configurations of the three types of robot tools 21EX (21EXA, 21EXB, and 21EXC) provided in the humanoid robot 1 according to the first embodiment, separately from the gripping portion 20, and their relationships with their applications.

Fig. 4A is a front view of the belt 28 attached to the humanoid robot 1 in Fig. 1.

As shown in Fig. 4A, the robot tools 21EX are detachably attached.

Figs. 4B to 4D show an aspect in which the robot tool 21EX is used to perform the work on the cargo 100.

As shown in Fig. 4B, the type of work of the robot tool 21EXA is painting, and a spray gun is attached as a tool.

The spray gun is one of pistol-like painting devices used in spray painting. The spray gun has a structure in which a paint is turned into a mist using compressed air of a compressor and ejected from a tip end of the spray gun, so that the paint can be uniformly applied to a surface to be painted.

As shown in Fig. 4C, the type of work of the robot tool 21EXB is gripping similarly to the gripping portion 20, but the robot tool 21EXB has such a structure that it is possible to grip special cargo 100 that is difficult to grip with the gripping portion 20.

That is, the robot tool 21EXB has, for example, a structure similar to that of a two-pronged fork that is applied as an attachment of a heavy machine. In the first embodiment, the robot tool 21EXB has a two-finger structure, and two fingers are opened and closed by the pressure supplied from a pressure source via a pipe. Therefore, versatility is reduced compared to the case of gripping operation (gripping portion 20) by a motor or the like, but the strength to grab the cargo 100 is increased.

As shown in Fig. 4D, the type of work of the robot tool 21EXC is drilling, and a drill is attached as a tool.

A drill blade with a predetermined diameter size can be detachably attached to the drill, and the drill blade is mounted in advance in accordance with a hole size for drilling the cargo 100.

Here, in a case where the type of work is different from the type of work (gripping) that can be processed by the gripping portion 20, an optimum robot tool 21EX is selected on the basis of the type of work to be executed for the cargo 100 (see Table 1), and the gripping portion 20 is replaced with the selected robot tool 21EX to execute the process.

**[Table 1]**

| Type of Work for Cargo | Robot Tool Type | Characteristics |
|---|---|---|
| Painting | Robot Tool 21EXA | Spray Gun |
| Special Gripping | Robot Tool 21EXB | Two-Pronged Fork |
| Drilling | Robot Tool 21EXC | Mounting of Drill Blade |
| ... | ... | ... |

A sensor portion corresponding to the palm sensor portion 26 is also attached to each robot tool 21EX.

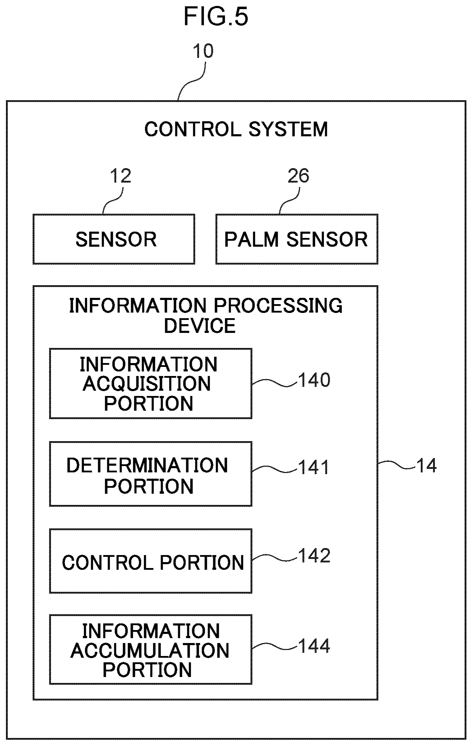

Fig. 5 is a schematic view of an example of a control system of the humanoid robot according to the first embodiment. A control system 10 includes a sensor 12 carried on the humanoid robot, the palm sensor 26 including the high-resolution camera and the MoPU, and the information processing device 14.

The sensor 12 sequentially acquires information indicating at least a distance and an angle between the cargo 100 near the humanoid robot 1 for which the humanoid robot 1 works and the arm portions 5 and 6. As the sensor 12, a highest-performance camera, a solid-state light detection and ranging (LiDAR), a multi-color laser coaxial displacement meter, or various other sensor groups can be adopted. In addition, examples of the sensor 12 include a vibration meter, a thermo camera, a hardness meter, a radar, a LiDAR, a high-pixel/telephoto/ultra-wide-angle/360-degree/high-performance camera, vision recognition, fine sound, ultrasonic wave, vibration, infrared ray, ultraviolet ray, electromagnetic wave, temperature, humidity, spot artificial intelligence (AI) weather forecast, high-accuracy multi-channel global positioning system (GPS), low-altitude satellite information, and long-tail incident AI data.

The sensor 12 detects an image, a distance, vibration, heat, odor, color, sound, ultrasonic waves, ultraviolet rays, infrared rays, or the like, in addition to the above-described information. Examples of the information detected by the sensor 12 further include the movement of the center of gravity of the humanoid robot 1, the detection of the material of the floor on which the humanoid robot 1 is installed, the detection of an outside air temperature, the detection of an outside air humidity, the detection of the angle of tilt of the floor from above, below, the side, and at an angle, and the detection of a moisture amount.

The sensor 12 performs the detection, for example, every nanosecond.

The palm sensor 26 (the high-resolution camera and the MoPU) is a sensor provided in the gripping portions 20 of the arm portions 5 and 6, and has a camera function of capturing an image of the cargo 100 and a position specification function of specifying the position of the cargo 100, separately from the sensor 12.

In a case where one MoPU is used, it is possible to acquire vector information of the movement of a point indicating the position where the cargo 100 is present along two coordinate axes (x-axis and y-axis) in a three-dimensional orthogonal coordinate system. Using the stereo camera's principle, the vector information of the movement of a point indicating the position where the cargo 100 is present along three coordinate axes (x-axis, y-axis, and z-axis) in a three-dimensional orthogonal coordinate system may be output by using two MoPUs. The z axis is an axis along a depth direction.

The information processing device 14 includes an information acquisition portion 140, a determination portion 141, a control portion 142, and an information accumulation portion 144.

The information acquisition portion 140 acquires information on the cargo 100 detected by the sensor 12 and the palm sensor 26 (the high-resolution camera and the MoPU). Various pieces of information acquired by the information acquisition portion 140 are accumulated in the information accumulation portion 144. The determination portion 141 determines the type of work to be executed for the cargo 100 that is a target.

The control portion 142 controls a turning operation and a vertical moving operation of the connecting portion 4 and operations of the arm portions 5 and 6 using the information acquired by the information acquisition portion 140 from the sensor 12 and the artificial intelligence (AI).

In addition, the control portion 142 grasps the type (shape, size, hardness, and the like) and position of the cargo 100 in detail using the information acquired by the information acquisition portion 140 from the palm sensor 26 (the high-resolution camera and the MoPU), and performs control to cause the gripping portion 20 to face the cargo 100, to suck the cargo 100 by the suction pad 24 and/or grab the cargo 100 by, for example, three or five finger portions 22A to 22F in accordance with the outer shape and position (gripping control). Based on the outer shape information, the type of the cargo 100 may be grasped, and the gripping control (only the "suction", only the "grabbing", a combination of the "suction" and "grabbing", or the like) may be selected.

Then, in a case where the type of work determined by the determination portion 141 is the gripping of the cargo 100, the control portion 142 executes work to mount the gripping portions 20 on the arm portions 5 and 6 and control the gripping portions 20 in order to grip the cargo 100.

For example, the control portion 142 executes the following processes as its overall operation.
(1) The connecting portion 4 is driven so that the cargo 100 on the shelf or floor can be picked up, and the upper body portion 2 is tilted forward or backward.
(2) The arm portions 5 and 6 and the gripping portions are driven so that the cargo 100 can be gripped.
(3) The upper body portion 2 is driven up and down with respect to the leg portion 3 to match a height of a work stand in the production line.
(4) A balance is kept to prevent the humanoid robot 1 from falling.
(5) The driving of the wheels 7 and 8 is controlled so that the humanoid robot 1 can push a cart or the like.

For example, in a case where the cargo 100 on the floor is picked up, the information processing device 14 acquires information about the cargo 100 detected by the sensor 12, and controls the connecting portion 4 and the arm portions 5 and 6 using the acquired information about the cargo 100 and the AI, thereby picking up the cargo 100 on the floor and moving the picked up cargo 100 to a predetermined position.

Hereinafter, work of the first embodiment will be described.

### (Gripping Control for Cargo 100)

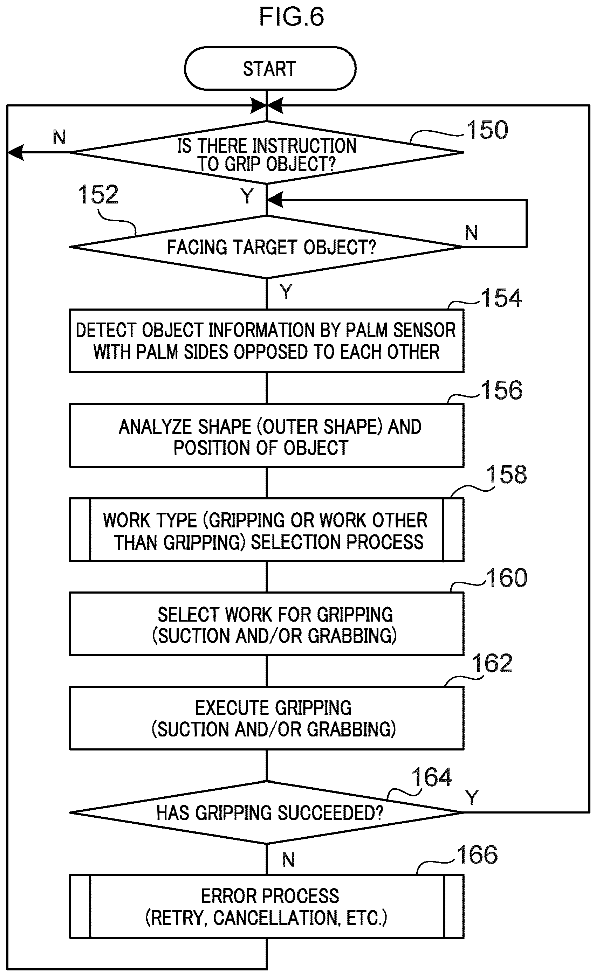

Fig. 6 is a flowchart showing a procedure of gripping control for a case where the cargo 100 is gripped by the gripping portion 20.

In Step 150, it is determined whether an instruction to grip the cargo 100 has been issued. In a case where an affirmative determination is made, the process proceeds to Step 152, and the humanoid robot 1 is moved (for example, the arm portions 5 and 6 are operated) to cause the palm side to face the target cargo 100. Then, the process proceeds to Step 154.

In Step 154, information about the cargo 100 is detected by the palm sensor 26 (the high-resolution camera and the MoPU) with palm sides 20A opposed to each other.

In the next Step 156, the detection information obtained by the palm sensor 26 is analyzed to grasp the type (shape, size, hardness, and the like) and position of the cargo 100 in detail, and the process proceeds to Step 158.

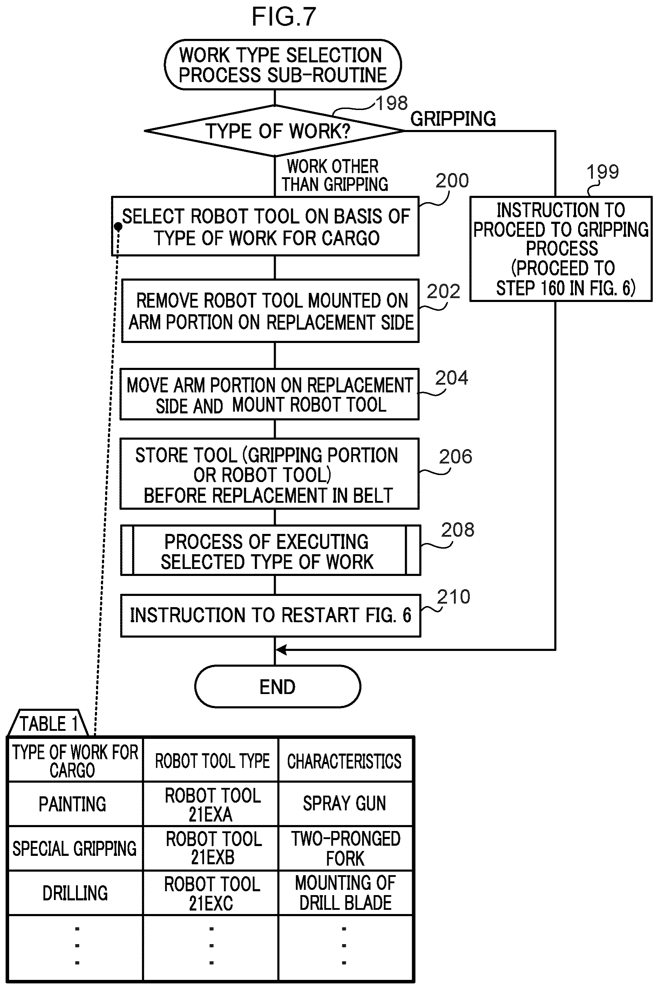

In Step 158, a process of selecting the type of work (gripping or a type of work other than gripping) for the gripping portion 20 corresponding to the attributes of the cargo 100 is executed. The selection process will be described in detail with reference to Fig. 7, and in a case where the type of work is gripping in the selection process of Fig. 7, the process proceeds to Step 160.

In Step 160, work for gripping the cargo 100 is selected. For example, only the "suction", only the "grabbing", a combination of the "suction" and "grabbing", or the like is selected, and the process proceeds to Step 162.

In Step 162, the gripping (only the "suction", only the "grabbing", or the "suction" and "grabbing") of the cargo 100 is executed.

In the next Step 164, it is determined whether the gripping of the cargo 100 has succeeded. In a case where an affirmative determination is made, the gripped cargo 100 is conveyed to a predetermined place, and the process proceeds to Step 150 to wait for an instruction to grip the next cargo 100.

In a case where a negative determination is made in Step 164, the process proceeds to Step 166 to execute an error process.

Since the palm sensor 26 including the high-resolution camera and the MoPU is attached to the gripping portion 20, an item can be reliably picked with a suction surface by mounting the gripping portion 20 having the above-described structure on the arm portions 5 and 6 of the humanoid robot 1. Even in a case where the humanoid robot 1 moves quickly, the cargo 100 can be conveyed without dropping from the gripping portion 20.

In addition, since the palm sensor 26 (the high-resolution camera and the MoPU) is carried on the palm side 20A, the cargo 100 can be captured with high precision, so that it is possible to handle work requiring minute movements.

Furthermore, a very soft and fragile item can also be grabbed by the movements of the finger portions 22A, 22B, and 22C without using the suction pad 24, and damage to the soft cargo 100 can be prevented by adjusting the grabbing force.

### (Details of Robot Tool Selection Process)

Fig. 7 is a control flowchart showing details of a work type selection process (robot tool selection process sub-routine) in Step 158 in Fig. 6.

In Step 198, it is determined whether the type of work is gripping or work other than gripping. In a case where it is determined in Step 198 that the type of work is gripping, an instruction to return to Step 160 in Fig. 6 is issued in Step 199, and the sub-routine ends.

In Step 199, in a case where it is determined that the type of work is work other than gripping, the process proceeds to Step 200, and the robot tool 21 is selected on the basis of the type of work (see Table 1) for the cargo 100.

That is, as shown in Table 1, the type of the robot tool 21 required is determined in accordance with the type of work for the cargo 100.

Selecting the type of the robot tool based on the type of work for the cargo 100 shown in Table 1 is merely an example, and the type of the robot tool may be determined on the basis of the type and number of the provided robot tools.

In the first embodiment, since the three types of robot tools 21 are mounted on the belt 28, selection is made from the three types of robot tools 21. However, the number of robot tools to be mounted on the belt 28 may be increased, or a robot tool may be selected from various robot tools 21 and mounted on the belt 28 in advance in accordance with the work site. In addition, different types of robot tools 21 may be mounted for each humanoid robot 1.

In the next Step 202, the tool (which is usually the gripping portion 20, but a different robot tool 21 may be already attached) mounted on the arm portion 6 (or 5) on the replacement side is removed.

In the next Step 204, the arm portion 6 (or 5) on the replacement side is moved to the position of the belt 28, and the robot tool 21 is mounted thereon.

In the next Step 206, the tool gripped by the arm portion 5 (or 6) on the non-replacement side, which has been originally mounted on the arm portion 6 (or 5) on the replacement side, is stored in the holder of the belt 28, and the process proceeds to Step 208.

In Step 208, the work that has been programmed for each robot tool is executed. In the next Step 210, an instruction to re-start (proceeding to Step 150) the flowchart of Fig. 6 is issued, and this routine ends.

As described above, in the first embodiment, in addition to the control of the gripping operation by the gripping portion 20, for example, the robot tool 21 is prepared in accordance with the type of work for the cargo 100.

Therefore, by directly mounting the robot tool 21, it is possible to eliminate control burdens (burdens related to relative position control between the gripping portion 20 and the tool, and the like) generated by working while gripping the tool necessary for the type of work with the gripping portion of the comparative example.

### (Second Embodiment "Replacement of Tip End of Finger")

Hereinafter, a second embodiment will be described. In the embodiment, the same components as those in the first embodiment will be denoted by the same reference numerals, and description of their configurations will be omitted.

The second embodiment is characterized in that a tip end of a finger as the gripping portion 20 can be changed to a tool corresponding to the type of work as in the case of the robot tool described in the first embodiment.

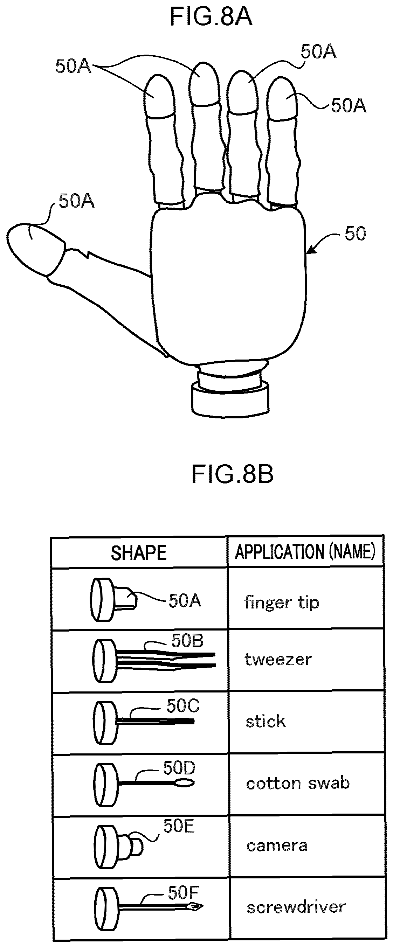

As shown in Fig. 8A, basically, a hand tool 50 according to the second embodiment has a main purpose of gripping cargo 100, similar to the gripping portion 20 according to the first embodiment.

Each finger of the hand tool 50 is selectively detachable. In the state shown in Fig. 8A, first joint portions 50A ("finger tips" shown in Fig. 8B) for the main purpose are mounted.

As shown in Fig. 8B, the respective finger portions can be replaced with first joint portions 50B to 50F each having a shape corresponding to the type of work.

The first joint portion 50B is a so-called "tweezers", and is applied to pinch and grab a thin member.

The first joint portion 50C is a "stick", and is applied to press a component with a stick-like member.

The first joint portion 50D is a "cotton swab", and is applied to wipe off dirt on a component or remove moisture with a spherical cotton body.

The first joint portion 50E is a "camera", and is applied to capture an image (particularly a close-up image) of a component.

The first joint portion 50F is a "screwdriver", and is applied to fasten or loosen a screw.

The hand tool according to the second embodiment is particularly optimum for work such as assembling or disassembling of fine components (electronic components, precision components, or the like).

### (Third Embodiment "Remote-Control Operation of Finger Portion")

Hereinafter, a third embodiment of the disclosure will be described. In the embodiment, the same components as those in the first or second embodiment will be denoted by the same reference numerals, and description of their configurations will be omitted.

The third embodiment is characterized in that, in the hand tool 50 shown in the second embodiment (see Figs. 8A and 8B), a portion ahead of the first joint portion 50A is separated from the hand tool 50 to perform work.

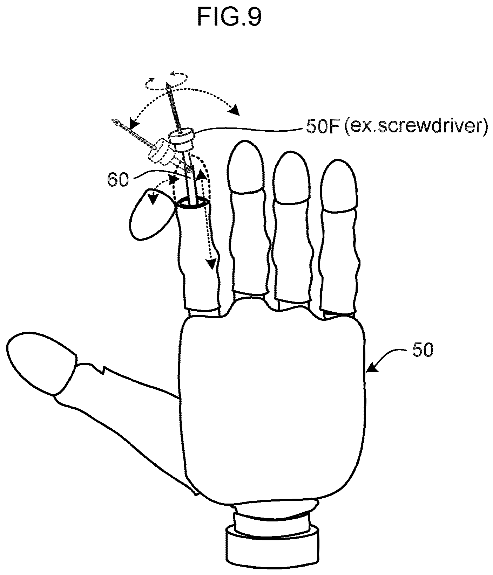

As shown in Fig. 9, the first joint portion 50A of the hand tool 50 has an openable/closable lid shape, a tool corresponding to the type of work shown in Fig. 8B is incorporated in the finger, and each tool is connected to an extension bar 60. The extension bar 60 is extendable, adjustable in angle, and rotatable to execute a type of work corresponding to each tool in a state of being separated from the first joint portion 50A.

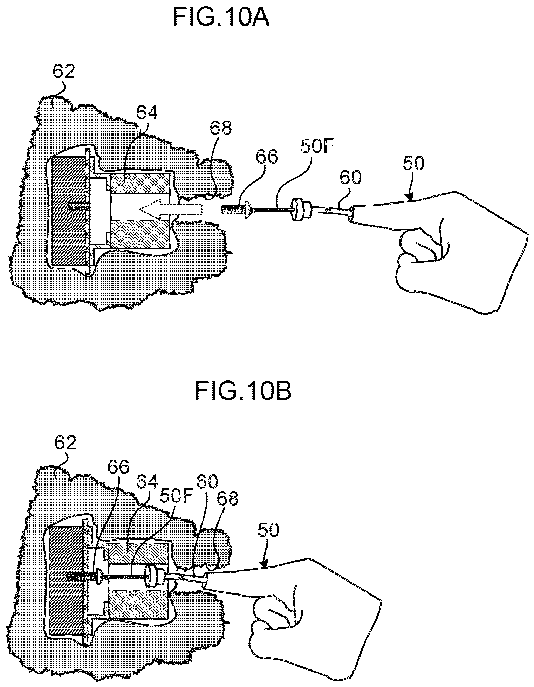

Figs. 10A and 10B show a work example in a case where the "screwdriver" that is the first joint portion 50F shown in Fig. 8B is used as the type of work of the hand tool 50 according to the third embodiment.

Figs. 10A and 10B show a status of a screwing process (fastening and removing of a screw 66) accompanying the attachment/detachment, repair, or the like of an electronic component 64 installed in a stuffed toy type AI robot 62 covered with a soft material.

As shown in Fig. 10A, since the hand tool 50 cannot enter a gap 68 of the AI robot 62, the "screwdriver" cannot directly approach a fastening position of the screw 66 of the electronic component 64.

Therefore, in a state in which the extension bar 60 is extended, the screw 66 is mounted on a tip end of the "screwdriver" and inserted into the gap 68.

As shown in Fig. 10B, the "screwdriver" extended at the extension bar 60 can approach the fastening position of the screw 66 of the electronic component 64, and fastening work can be performed here. The same also applies to work of removing the screw 66.

### (Modification Example of Third Embodiment)

In the third embodiment, the configuration has been described in which the work can be executed at a position away from the hand tool 50 using the extension bar 60, but the work may be performed by separating the first joint portions 50A to 50F from the hand tool 50 (detachment from the tip end of the finger portion).

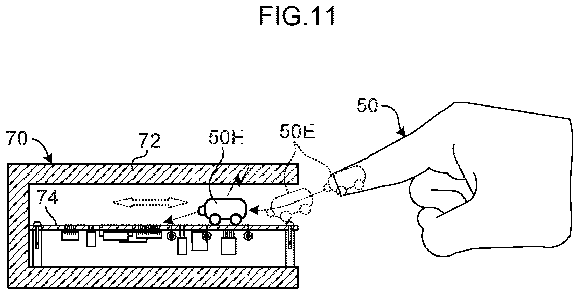

Fig. 11 shows a status in which the first joint portion 50E ("camera") is sent to a substrate 74 that is covered with a housing 72 in an electronic component 70.

The first joint portion 50E moves on the substrate 74 by a remote-control operation (for example, wireless communication with the information processing device 14 shown in Fig. 5), and captures an image of, for example, a soldering state on the substrate 74. The information processing device 14 analyzes the captured image, determines the suitability of the soldering state of the substrate 74, and issues a repair instruction as the next work as necessary. For example, an instruction to execute soldering repair or the like using a different tool is issued, but the repair work may be performed separately from the hand tool 50. Since the soldering work consumes more power than the camera monitoring, power supply lines are preferably wired.

In the modification example of the third embodiment, the remote-control operation is performed by wireless communication, but may be performed by wired communication.

### (Fourth Embodiment)

Hereinafter, a fourth embodiment of the disclosure will be described. In the embodiment, the same components as those in the first, second, or third embodiment will be denoted by the same reference numerals, and description of their configurations will be omitted.

### (Change of Robot Tool 21)

In the fourth embodiment, a configuration is provided in which the three robot tools 21EXA, 21EXB, and 21EXC are detachably held via the belt 28 (including the holder) in the lower portion (so-called waist position) of the upper body portion 2 of the humanoid robot 1. In this case, theoretically, the number of robot tools that can be held in the holder is not limited (one or four or more). However, there is a physical limit on the number of robot tools to be held.

Therefore, in a case where work other than the types of work of the robot tools 21 (for example, three types of the robot tools 21 (21EXA, 21EXB, and 21EX) held in the belt 28 is requested, the humanoid robot 1 needs to individually move to a storage where other types of robot tools 21 are stored, to re-mount robot tools on the belt 28.

Therefore, the original work may be hindered due to the moving period required for the humanoid robot 1 to move to the storage, the congestion of a plurality of the humanoid robots 1 at the storage, and the like.

Therefore, in the fourth embodiment, a moving body 360 is provided which is movable with a robot tool 21 carried thereon between the storage and each of a plurality of the humanoid robots 1 working on the site.

The moving body 360 may have any moving form such as a humanoid robot specialized in transporting the robot tool 21, a transport vehicle moving on a road surface, and a flying body moving in the air. In the fourth embodiment, a flying body 360A moving in the air is adopted as the moving body 360.

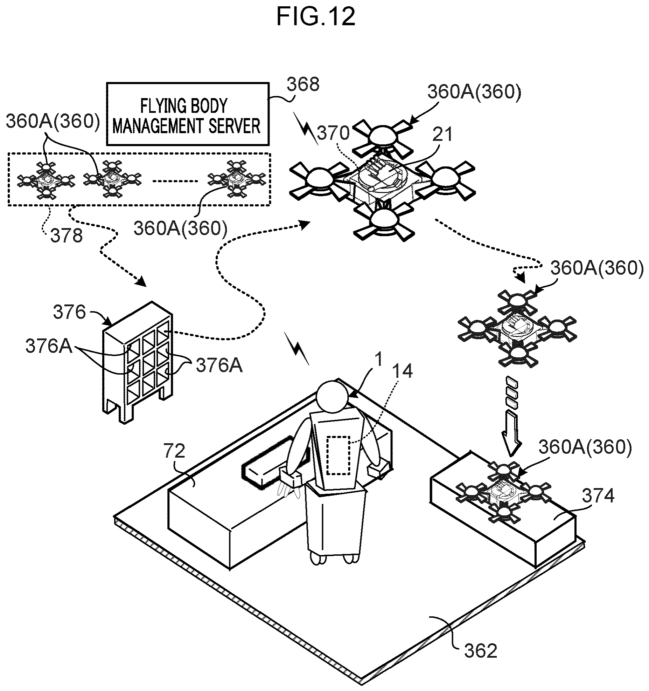

Fig. 12 is an overhead view showing a work site 362 where the humanoid robot 1 is working, and a flying body 360A as the moving body 360 that is movable around the work site 362.

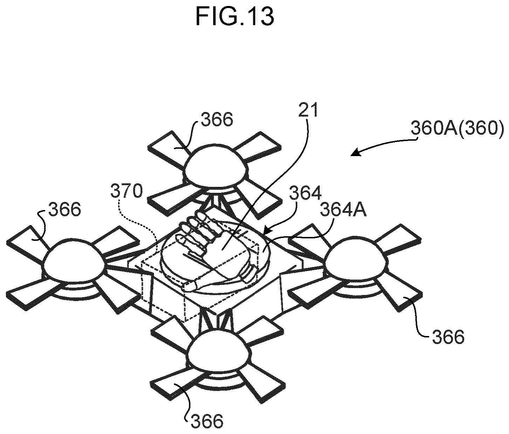

As shown in Fig. 13, in the flying body 360A, a propeller 366 is attached to each of four corner portions of a substantially rectangular main body 364. The flying body 360A is managed by a flying body management server 368. In a case where an instruction for a flight route or the like is issued from the flying body management server 368 to a specific flying body 360A, a rotation speed, a direction, and the like of each propeller 366 of the supported flying body 360A are controlled by the control of a controller 370 built in the main body 364, and the supported flying body moves to a destination along a predetermined route (that is, automatic driving is performed).

An upper surface of the main body 364 serves as a placing stand 364A on which the robot tool 21 to be transported is placed and held.

In addition, a camera is attached to the main body 364, and a captured image is transmitted to the controller 370 to monitor areas around the route in addition to the position management control using a global positioning system (GPS) in a case where the flying body 360A flies on the basis of predetermined route information.

The camera may be just an image capturing element, and preferably has the same functions (a high-resolution camera function and an MoPU function) as the palm sensor 26 attached to the gripping portion 20. In addition, the palm sensor 26 provided in the robot tool 21 placed on the placing stand 364A can be used instead of providing the camera on the main body 364.

As shown in Fig. 12, in the work site 362, the humanoid robot 1 performs work toward a work desk 372 with the necessary robot tool 21 mounted thereon.

In the work site 362, a transfer stand 374 for transferring the robot tool 21 between the flying body 360A and the humanoid robot 1 is provided in addition to the work desk 372.

In a case where the humanoid robot 1 needs a robot tool 21 of a type different from that of the robot tool 21 held by the humanoid robot 1 in the work on the work desk 372, the humanoid robot 1 requests a necessary robot tool 21.

In response to this request, the flying body management server 368 that manages the flying body 360A selects a specific flying body 360A, and instructs the flying body 360A to start flying from a base 378 and fly between the storage 376 and the work site 362.

The storage 376 is provided with a plurality of housing portions 376A, and each housing portion 376A houses a robot tool 21.

The flying body management server 368 instructs the specific flying body 360A that has been instructed to fly, with route information for taking out a necessary robot tool 21 from the storage 376 and transporting the robot tool 21 to the work site 362 where the humanoid robot 1 that has made the request works.

Therefore, the humanoid robot 1 can perform work with replacement with the transported robot tool 21. The flying body 60A returns the robot tool 21 originally mounted on the humanoid robot 1 or the transported robot tool 21 (that is replaced again after the end of the work) to the storage 376 in a state in which the robot tool is placed on the placing stand 364A, and returns to the base 378.

Hereinafter, work of the fourth embodiment will be described.

### (Gripping Control for Cargo 100)

Fig. 6 is a flowchart showing a procedure of gripping control for a case where the cargo 100 is gripped by the gripping portion 20. Only differences from the first to third embodiments will be described.

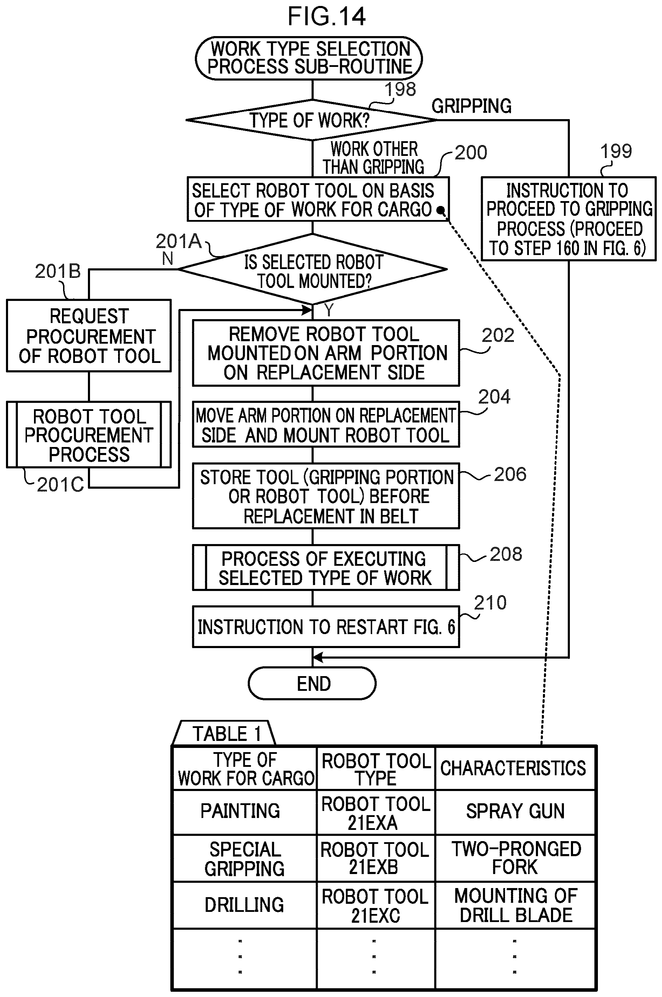

In Step 158, a process of selecting the type of work (gripping or a type of work other than gripping) for the gripping portion 20 corresponding to the attributes of the cargo 100 is executed. The selection process will be described in detail with reference to Fig. 14, and in a case where the type of work is gripping in the selection process of Fig. 14, the process proceeds to Step 160.

In Step 160, work for gripping the cargo 100 is selected. For example, only the "suction", only the "grabbing", a combination of the "suction" and "grabbing", or the like is selected, and the process proceeds to Step 162.

### (Details of Robot Tool Application Process)

Fig. 14 is a control flowchart showing details of a work type selection process (robot tool application process) sub-routine in Step 158 in Fig. 6.

In Step 198, it is determined whether the type of work is gripping or work other than gripping. In a case where it is determined in Step 198 that the type of work is gripping, an instruction to return to Step 160 in Fig. 6 is issued in Step 199, and the routine ends.

In Step 199, in a case where it is determined that the type of work is work other than gripping, the process proceeds to Step 200, and the robot tool 21 is selected on the basis of the type of work (see Table 1) for the cargo 100.

In the fourth embodiment, since the three types of robot tools 21 are mounted on the belt 28, selection is made from the three types of robot tools 21. However, the number of robot tools to be mounted on the belt 28 may be increased, or a robot tool may be selected from various robot tools 21 and mounted on the belt 28 in advance in accordance with the work site. In addition, different types of robot tools 21 may be mounted for each humanoid robot 1. In the next Step 201A, it is determined whether the selected robot tool is mounted, and in a case where a negative determination is made, the process proceeds to Step 201B to request procurement of the robot tool. In the next Step 201C, a robot tool procurement process is executed, and the process proceeds to Step 202. In a case where an affirmative determination is made in Step 201A, the process proceeds to Step 202.

In the next Step 206, the tool gripped by the arm portion 5 (or 6) on the non-replacement side, which has been originally mounted on the arm portion 6 (or 5) on the replacement side, is stored in the holder of the belt 28, and the process proceeds to Step 208.

In Step 208, the work that has been programmed for each robot tool is executed. In the next Step 210, an instruction to re-start (proceeding to Step 150) the flowchart of Fig. 6 is issued, and this routine ends.

### (Transport Control of Robot Tool 21)

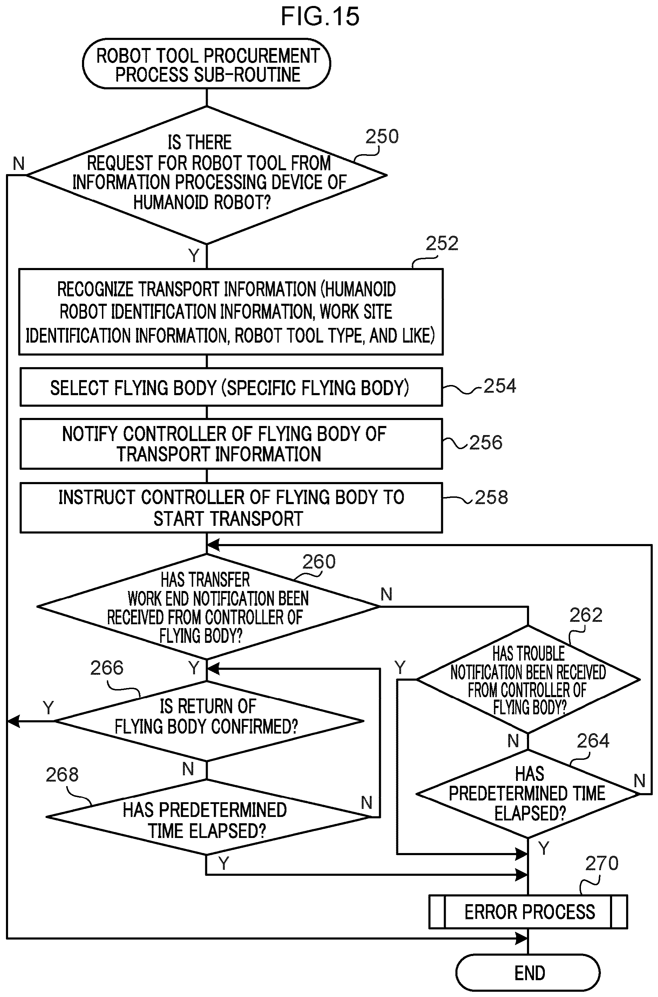

Fig. 15 is a flowchart showing a robot tool transport control routine that is executed in a case where the humanoid robot 1 needs a robot tool 21 of a type different from the robot tool 21 held by the humanoid robot 1 during the work in the work site 362.

The robot tool transport control routine is executed by the flying body management server 368, and is executed in cooperation with the information processing device 14 (see Fig. 5) carried on the humanoid robot 1 and the controller 370 (see Fig. 13) of the flying body 360A. That is, the robot tool transport control is activated by a request for the robot tool 21 from the information processing device 14. The transport (flight control) itself of the robot tool 21 by the flying body 360A is automatically driven by the controller 370 of the flying body 360A.

In Step 250 in Fig. 15, it is determined whether there is a request for the robot tool 21 from the information processing device 14 of the humanoid robot 1. In a case where a negative determination is made, this routine ends.

In addition, in a case where an affirmative determination is made in Step 250, the process proceeds to Step 252, and transport information including (1) identification information of the humanoid robot 1, (2) identification information of the work site 362, and (3) type of the robot tool 21 is recognized. Then, the process proceeds to Step 254.

In Step 254, a flying body 360A is selected and set as a specific flying body 360A, and then the process proceeds to Step 256 to notify the controller 370 of the flying body 360A of the transport information. Then, the process proceeds to Step 258.

In Step 258, the controller 370 of the flying body 360A is instructed to start transport. With this instruction, the flying body 360A starts flying from the base 378, moves to the storage 376, takes out a predetermined robot tool 21 from a housing portion 376A, and moves to the work site 362 in a state in which the robot tool 21 is placed on the placing stand 364A. Thereafter, the flying body 360A lands on the transfer stand 374 and stands by.

Thereafter, in a case where normal work is executed, the work is executed in accordance with the following procedure.
(Work 1) The humanoid robot 1 replaces the robot tool 21 currently mounted with the robot tool 21 placed on the flying body 360A.
(Work 2) In a case where the replacement ends, the flying body 360A takes off from the transfer stand 374.
(Work 3) The flying body 360A returns the robot tool 21 to the storage 376.
(Work 4) The flying body 360A returns to the base 378.

The work time of each of Work 1 to Work 4 can be roughly recognized as a work unit.

In the next Step 260, it is determined whether a notification indicating the end of the work of transferring the robot tool 21 has been received from the controller 370 of the flying body 360A. Here, as an example of the end of the work, the above Work 2 is finished. In a case where Work 2 ends, the work of transferring the robot tool 21 to the humanoid robot 1 is completed, and the original work of the humanoid robot 1 can be continued.

In a case where a negative determination is made in Step 260, the process proceeds to Step 262, and it is determined whether a trouble notification has been received from the controller 370 of the flying body 360A. In a case where an affirmative determination is made in Step 262, it is predicted that some kind of trouble has occurred in the series of Work 1 to Work 4 and the work has stopped, and the process proceeds to Step 270 to execute an error process. This routine ends on the condition that the error is resolved.

In addition, in a case where a negative determination is made in Step 262, the process proceeds to Step 264, and it is determined whether a predetermined time has elapsed. The work time from Work 1 to Work 2 is roughly predictable. Therefore, in a case where the work has not ended even after a preset predetermined time has elapsed (affirmative determination in Step 264), it is determined that an event interfering with the work has occurred, the process proceeds to Step 270 to execute an error process, and this routine ends on the condition that the error is resolved.

In addition, in a case where a negative determination is made in Step 264, it is determined that the work is being performed, the process returns to Step 260, and Steps 260, 262, and 264 are repeated until an affirmative determination is made in Step 260.

Here, in a case where an affirmative determination is made in Step 260, it is determined that the work from Work 1 to Work 2 has successfully ended, and the process proceeds to Step 266 to determine whether there is a return notification from the flying body 360A and whether the return is confirmed. In a case where an affirmative determination is made in Step 266, it is confirmed that the entire work has ended, and this routine ends.

In a case where a negative determination is made in Step 266, the process proceeds to Step 268, and it is determined whether a predetermined time has elapsed. In Step 268, the predetermined time is a work time from Work 1 to Work 4, and is set to be longer than the predetermined time (work time from Work 1 to Work 2) in Step 264.

In a case where an affirmative determination is made in Step 268, it is determined that some kind of trouble has occurred during returning of the flying body 360A, and the process proceeds to Step 270 to execute an error process. This routine ends on the condition that the error is resolved.

In addition, in a case where a negative determination is made in Step 268, the process returns to Step 266, and Steps 266 and 268 are repeated until an affirmative determination is made in Step 266.

As described above, in the fourth embodiment, in a case where the robot tool 21 is in short supply during the work of the humanoid robot 1 in the work site 62 (in a case where a necessary robot tool 21 is not present among the robot tools 21 held as extra ones), the flying body 60A transports the necessary robot tool 21 from the storage 76, and thus the humanoid robot 1 does not need to stop the work and move to take the robot tool 21 by itself.

Therefore, it is possible to continue the work without reducing the work efficiency of the main body of the humanoid robot 1.

For example, the humanoid robot 1 basically holds extra robot tools 21EX, but even in a case where irregular work occurs, the humanoid robot 1 can continue the work without leaving the work site 362 by cooperating with the flying body 360A.

In the fourth embodiment, the flying body 360A has been described as an example of the moving body 360, but a humanoid robot specialized in transporting the robot tool 21 or a transport vehicle moving on a road surface may be used. In addition, the target to be transported is not limited to a robot tool that is in short supply. A disposable item (cotton swab, cutter blade, adhesive tape, or the like) to be attached to the robot tool 21 and used may be transported, or a robot tool 21 of the same type may be transported in place of the robot tool 21 that needs to be repaired or replaced.

### (Fifth Embodiment)

Hereinafter, a fifth embodiment of the disclosure will be described. In the embodiment, the same components as those in the first, second, third, or fourth embodiment will be denoted by the same reference numerals, and description of their configurations will be omitted.

### (Example of Special Work)

Hereinafter, in the embodiment (primarily the fifth embodiment), an example of special work by the humanoid robot 1 will be described.

The special work is work that requires a relative positional relationship with a predetermined degree of precision or higher between three-dimensional positional information of the humanoid robot (including three-dimensional positional information of the robot tool 21EX) and three-dimensional positional information of a target.

In this example, work in which the humanoid robot 1 shapes a three-dimensional object instead of a 3D printer requiring an x-y-z table is shown as an example. Examples of the special work include work that requires precision of at least 1 mm unit to 1 µm unit as a unit of movement, such as assembling of a precision machine (clock tower), repair work, and activation of a chemical reaction at a molecular level using a microscope.

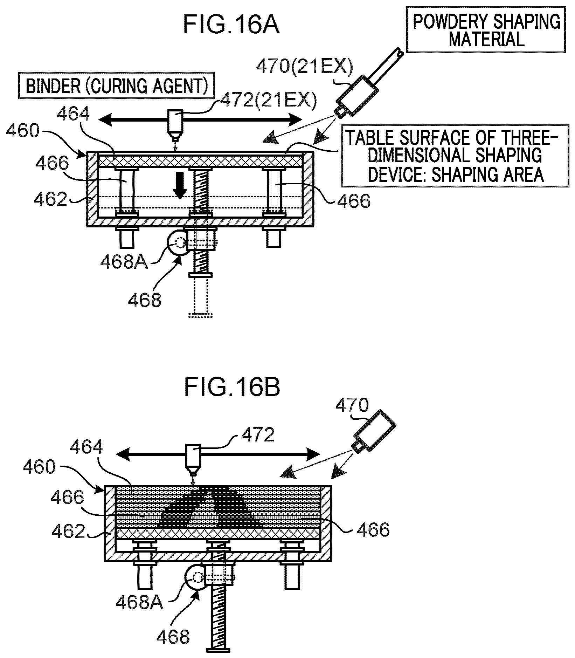

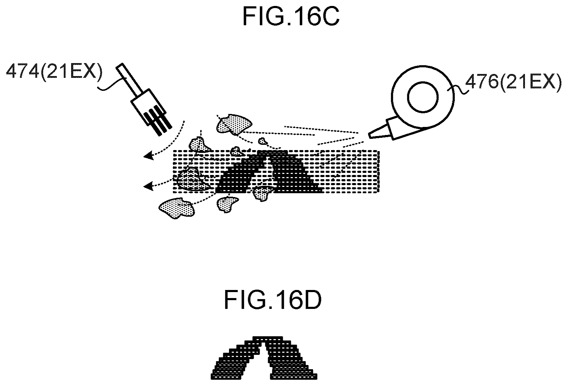

Figs. 16A to 16D show a process drawing showing a shaping work process in a three-dimensional shaping device 460.

Regarding the type of the three-dimensional shaping device 460 shown in Figs. 16A to 16D, a shaping material has a powder form, and a curing agent as a binder is discharged using a nozzle.

As shown in Fig. 16A, the three-dimensional shaping device 460 includes a box body 462 whose upper portion is opened, and a table 64 that forms a shaping area is disposed in the upper opening. The table 464 is vertically movable inside the box body 462 in a state of being supported by a pair of supports 466.

For example, the table 464 can be moved up and down with precision of at least a unit of shaping thickness by driving a motor 468A of a ball screw mechanism portion 468.

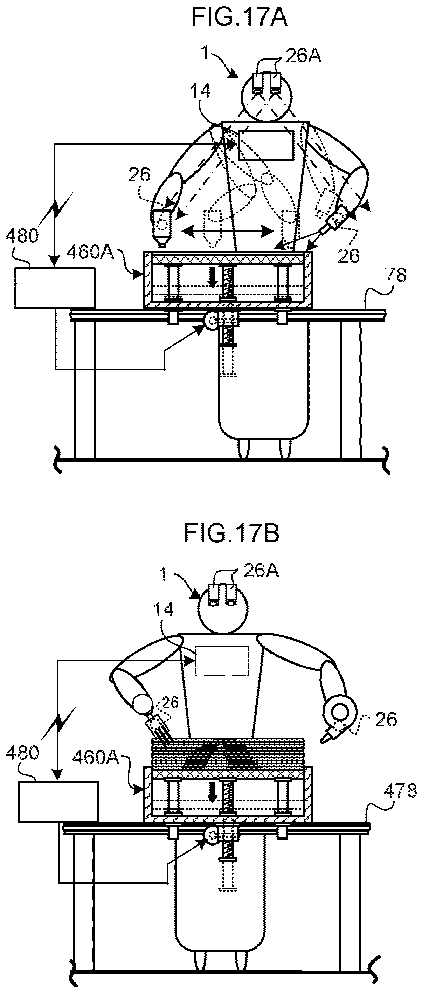

In the table 464, a position lowered by a unit of shaping thickness relative to an upper end of the box body 462 is set as a home position, and a shaping area (space) is formed by the table 464 and walls at four corners of the box body 462. A layer of a powdery shaping material is laid from a shaping material supply portion 470. As shown in Figs. 17A and 17B, the shaping material supply portion 470 is one of the robot tools 21EX.

A nozzle head 472 that discharges a binder (curing agent) is disposed over the box body 462. As shown in Figs. 17A and 17B, the nozzle head 472 is one of the robot tools 21EX.

The nozzle head 472 is two-dimensionally movable at a constant interval over an upper surface of the powdery shaping material laid on the table 464 on the shaping area (space), and a binder (curing agent) is discharged on the basis of shaping information corresponding to each layer.

Hereinafter, a shaping process will be described in accordance with a time flow of Figs. 16A to 16D.

(Step i) The table 464 is positioned at the home position, and a layer of the powdery shaping material is supplied from the shaping material supply portion 470 to the shaping area.

(Step ii) The binder (curing agent) is discharged from the nozzle head 472 on the basis of cross-sectional shape information for each layer. The shaping material in the portion where the binder is discharged is cured.

(Step iii) Every time the one-layer shaping is completed, the table 462 is lowered by the thickness of one layer, and the shaping process (laying of the shaping material and discharge of the binder) is repeated (all N layers).

(Step iv) In a case where the robot tools 21EX are replaced with a scraping tool 474 and a blower tool 476 and N-layer shaping ends, the table 464 is raised to the uppermost portion (for example, the home position or higher). Then, a non-cured shaping material is scraped off by the scraping tool 474 and blown off by the blower tool 476.

(Step v) In a case where the non-cured agent is removed, the cured shaping material remains, and the shaping is completed.

Here, in the above-described work process, a high-precision x-y-z table is essential in order to ensure the relative positional relationship among the shaping material supply portion 470, the nozzle head 472, and the table 464.

On the other hand, in the embodiment, the shaping material supply portion 470 and the nozzle head 472 are mounted on the humanoid robot 1 as robot tools 21EX, and the positional relationship with the table 464 is ensured on the basis of detection information of the palm sensor 26 and the like, so that the high-precision x-y-z table is not necessary.

Figs. 17A and 17B show a work process in a case where the humanoid robot 1 executes the work processes of Figs. 16A to 16D.

The humanoid robot 1 faces a shaping work base 478 at a predetermined position. A part (assembly 460A incorporated in the box body 462, excluding the shaping material supply device 470 and the nozzle head 472) of the three-dimensional shaping device 460 is placed at a predetermined position on the shaping work base 478.

The position of the assembly 460A is grasped by a controller 480. The controller 480 communicates (wirelessly or via wire) with the information processing device 14 of the humanoid robot 1 to exchange information on the positional relationships.

That is, the relative positions of the humanoid robot 1 and the assembly 460A are recognized based on the original position state (x-y-z coordinates) for the three-dimensional shaping set at the predetermined position of the shaping work base 478, and as a result, the positional relationship between the humanoid robot 1 and the assembly 460A can be precisely grasped.

In Fig. 17A, in the above-described work process, (Step i) to (Step iv) are executed. In Fig. 17B, in the above-described work process, (Step v) is executed.

In this case, the operation of each step is performed while always grasping the relative positional relationship with the assembly 460A by the palm sensor 26 (or a sensor portion corresponding thereto) of each robot tool 21EX. By separately attaching a high-resolution camera and an MoPU, or a sensor portion 26A such as LiDAR to a head portion of the humanoid robot 1, it is possible to improve the precision during the operation of the robot tools 21EX.

According to the example, the robot tools 21EX are used for special work that requires a relative positional relationship of a predetermined level or higher with respect to a target.

More specifically, even in a case where there is no x-y-z table that requires a relative positional relationship with a predetermined degree of precision or higher between the three-dimensional positional information of the humanoid robot (including the three-dimensional positional information of the robot tool 21EX) and the three-dimensional positional information of the target, the work process (i to v) for the three-dimensional shaping can be precisely performed with the detection information obtained by the palm sensor 26 of the humanoid robot 1.

In the example, as the three-dimensional shaping device 460, the device that executes three-dimensional shaping using a powder as a shaping material and a curing agent as a binder has been described, but a resin jetting type three-dimensional shaping device that discharges a resin material melted by heat in a thread shape and shapes the resin material in a layered manner may be used. In this case, the robot tool 21 may be a combination of a melting furnace head tool that melts a resin material and a head that discharges the melted resin material, and the table may be moved up and down or the robot tool 21 may be moved up and down in the z direction (height direction).

In addition, in the embodiment, the present invention can also be applied to three-dimensional shaping devices shown in the following (Shaping Method 1) to (Shaping Method 7), including the above-described three-dimensional shaping device. In each of (Shaping Method 1) to (Shaping Method 7), an example of the relationship between the type and function of a shaping method and the material suitable for each shaping method is shown.

### (Shaping Method 1) Binder Jetting Method "applied in the embodiment"

A binder-jetting three-dimensional shaping device adopts a method involving jetting of a liquid binder to a powder bed and selective solidification. Examples of the material include gypsum, ceramics, sand, calcium, and plastic.

### (Shaping Method 2) Directed Energy Deposition Method

A directed energy deposition three-dimensional shaping device adopts a method involving controlling a heat generation position by concentrating beams or the like while supplying a material, and selectively melting and binding the material. Examples of the material include metal.

### (Shaping Method 3) Material Extrusion Method

A material-extrusion three-dimensional shaping device adopts a method involving extruding a flowable material from a nozzle, and allowing deposition and solidification to occur simultaneously. Examples of the material include an acrylonitrile-butadiene-styrene (ABS) resin, a polylactic acid (PLA), nylon 12, polycarbonate (PC), and polyphenylsulfone (PPSF).

### (Shaping Method 4) Material Jetting Method "corresponding to the resin jetting type shown as a modification example of the example"

A material-jetting three-dimensional shaping device adopts a method involving jetting of droplets of a material, and selective deposition and solidification. The three-dimensional shaping device adopts a representative shaping method based on an inkjet method. Examples of the material include a UV curable resin, fat, wax, and solder.

### (Shaping Method 5) Powder Bed Fusion Method

A powder bed fusion three-dimensional shaping device adopts a method involving selective fusion of a region where a powder is laid by thermal energy irradiated from a laser. Examples of the material include engineering plastic, nylon, and metal.

### (Shaping Method 6) Sheet Lamination Method

A sheet-laminating three-dimensional shaping device adopts a method involving bonding a sheet-like material. Examples of the material include paper, a resin sheet, aluminum sheet wax, and solder.

### (Shaping Method 7) Vat Photopolymerization Method

A vat photopolymerization three-dimensional shaping device adopts a method involving selective curing of a liquid photocurable resin stored in a tank by photopolymerization. Examples of the material include a UV curable resin.

Although (Shaping Method 1) to (Shaping Method 7) have been described as above, a three-dimensional shaping device that adopts a shaping method different from (Shaping Method 1) to (Shaping Method 7) may be used.

### (Sixth Embodiment "Sorting and Picking Work")

Hereinafter, a sixth embodiment will be described. In the sixth embodiment, the humanoid's hand tool 50 described in the second embodiment is applied for description. However, the humanoid's hand tool 50 is not essential, and the positioning of the gripping portion 20 or the robot tool 21EX described in the first embodiment may be applied.

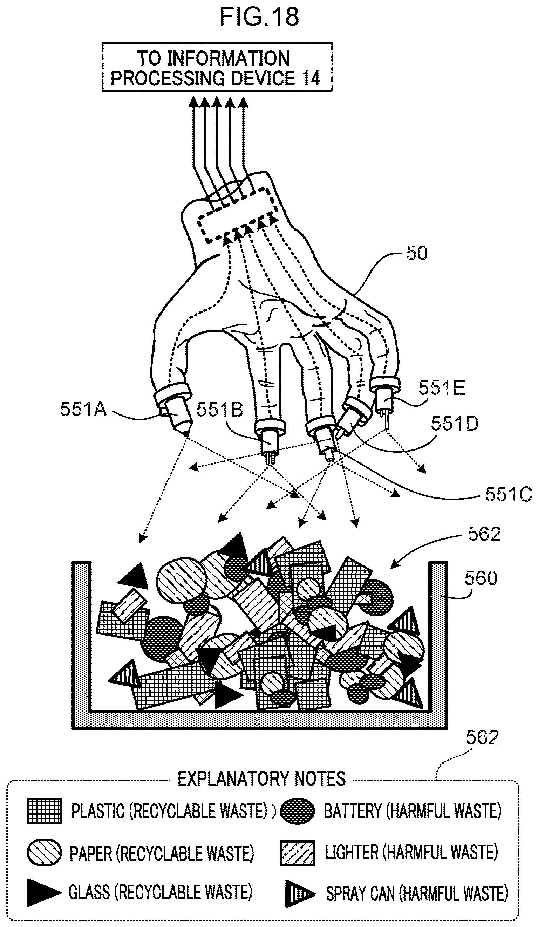

As shown in Fig. 18, the sorting and picking work refers to work of selecting and picking waste 562 with specific attributes (types) from waste 562 with different attributes (types) housed in a mixed manner in a single box body 560.

As shown in Fig. 18, the box body 560 houses six types of waste 562 in a mixed manner. Details of the waste 562 are as follows: plastic, paper, and glass as recyclable waste, and batteries, lighters, and spray cans as harmful waste.

In the sixth embodiment, sensor portions 551A to 551E (to be described in detail later) that can detect the attributes of the waste 562 are attached to fingertips of the hand tool 50, respectively, and the hand tool 50 is caused to face the box body 560 to detect the attributes by the sensor portions 551A to 551E.

An example of the sensor portions 551A to 551E attached to the fingers, respectively, will be described below.
(Thumb) A Visual sensor 551A that detects visual information as attribute information
(Index Finger) An auditory sensor 551B that detects auditory information as attribute information
(Middle Finger) An olfactory sensor 551C that detects olfactory information as attribute information
(Ring Finger) A tactile sensor 551D that detects tactile information as attribute information
(Little Finger) A taste sensor 551E that detects taste information as attribute information

The sensor portions 551A to 551E are not limited to the above examples, and the detection mode is also not particularly limited to contact, non-contact, or the like. In addition, detection sensors with the same type of attributes may be mounted on a plurality of fingers as necessary.

Since the finger joints of the hand tool 50 can freely move relative to each other over the box body 560, the sensor portions 551A to 551E at the fingertips can freely change their detection regions. Therefore, the entire region of the box body 560 can be set as a detection region.

The sensor portions 55 1A to 551E at the fingertips can be separated from the fingertips and enter the space where the waste 562 is housed in the box body 560, to detect the attribute information of the waste at a visually hidden position.

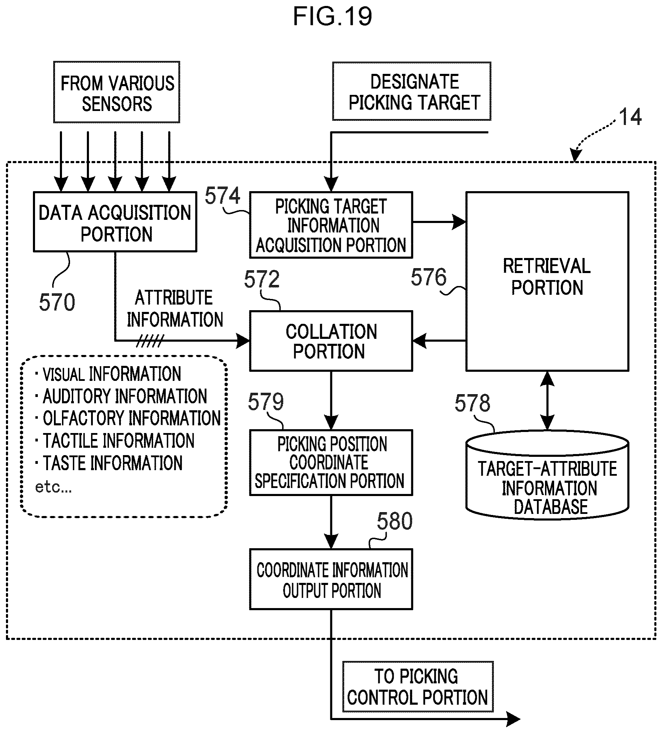

Here, in a case where the type of the waste 562 (target) to be picked is designated, the position coordinates (three-dimensional coordinates) of the waste 62 to be picked can be specified by reading the attributes (attribute information obtained through the five senses of sight, hearing, smell, touch, and taste) of the waste 562 to be picked from a target-attribute information database 578 (see Fig. 19), and collating the read attributes with the attribute information detected by the sensor portions 551A to 551E.

On the basis of the position coordinates, for example, the gripping portion 20 shown in Fig. 3 is mounted, and the picking work is executed. In this case, the hand tool 50 according to the third embodiment may be mounted on the right hand side and the gripping portion 20 for the picking work may be mounted on the left hand side in advance.

Fig. 19 is a functional block diagram specialized for target attribute determination control that is executed in the information processing device 14 (see Fig. 5). The blocks shown in Fig. 19 are classified by function, and a part or the whole of the target attribute determination control function may be operated by a software program using a microcomputer (including ASIC or the like).

The target attribute determination control function of the information processing device 14 includes a data acquisition portion 570. The data acquisition portion 570 acquires detection data of the sensor portions 551A to 551E attached to the fingertips of the hand tool 50.

The data acquisition portion 570 is connected to a collation portion 572. The data acquisition portion 572 sends the acquired detection data from the sensor portions 551A to 551E to the collation portion 572.

In addition, the target attribute determination control function of the information processing device 14 includes a picking target information acquisition portion 574. The picking target information acquisition portion 574 acquires information (picking target information) about waste to be picked. The picking target information acquisition portion 574 is connected to a retrieval portion 576 and sends the picking target information.

The retrieval portion 576 accesses the target-attribute information database 578 and reads the attribute information of the target designated to be picked.

The attribute information read by the retrieval portion 576 is sent to the collation portion 572.

Here, the collation portion 572 collates the attribute information received from the retrieval portion 576 with the attribute information received from the data acquisition portion 570, and sends the collation result to a picking position coordinate specification portion 579. The picking position coordinate specification portion 579 specifies the position coordinates (three-dimensional coordinates) of the target (waste 562) in the box body 560 (see Fig. 18) of the attribute information that matches in the collation.

The position coordinates specified by the picking position coordinate specification portion 579 are sent to a picking control portion, which is another function of the information processing device 14, via a coordinate information output portion 580.

As a result, the picking control portion controls the operation of the gripping portion 20 for the picking work on the basis of the received position information, and thus the waste 562 designated to be picked in the box body 560 can be picked in a pinpoint manner.

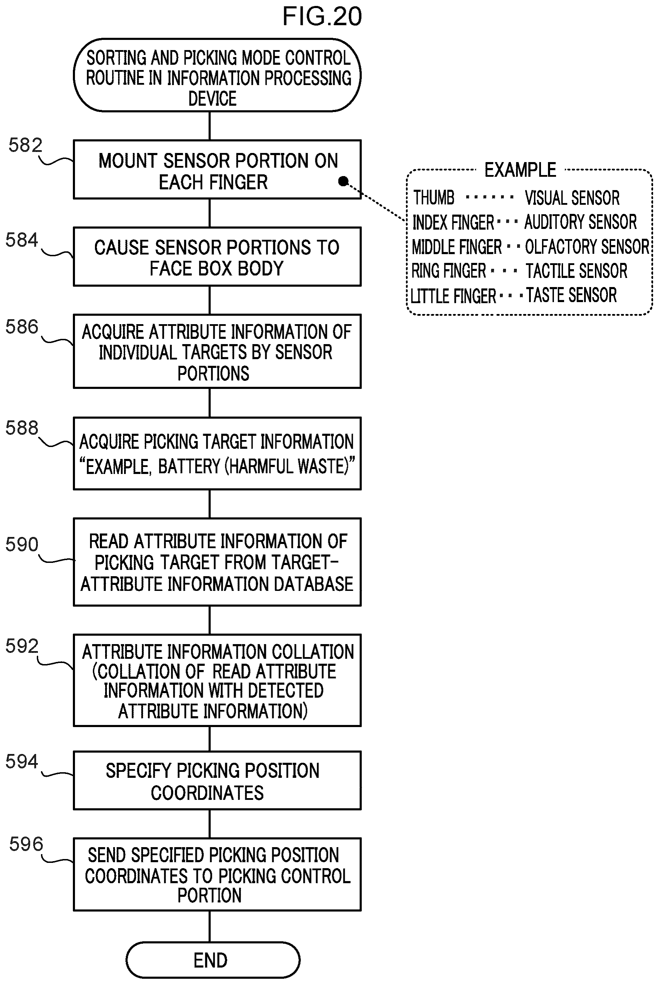

Hereinafter, actions of the sixth embodiment will be described with reference to the flowchart of Fig. 20.

In Step 582, the sensor function is mounted on each fingertip of the hand tool 50. For example, the visual sensor 551A is mounted on the thumb, the auditory sensor 551B is mounted on the index finger, the olfactory sensor 551C is mounted on the middle finger, the tactile sensor 551D is mounted on the ring finger, and the taste sensor 551E is mounted on the little finger.

The relationship between the finger type and the sensor type may be changed as necessary, or only the necessary and sufficient number of sensors may be mounted.

In the sixth embodiment, the sensor portions 551A to 551E are mounted on the fingertips, respectively, in a state in which the hand tool 50 as the gripping portion 20 is mounted on the arm portions 5 and 6. However, with respect to the arm portions 5 and 6, replacement with robot tools 21EX that belong to the robot tools 21EX shown in the first embodiment and have a sensor function in advance may be possible.

In the next Step 584, the sensor portions 551A to 551E are caused to face the box body 560 in which targets are housed in a mixed manner, and the process proceeds to Step 586.

In Step 86, the sensor portions 551A to 551E acquire attribute information of the individual targets.

In the next Step 588, picking target information is acquired. For example, in a case where a command is given to pick a battery belonging to harmful waste, attribute information of the battery is acquired. Although batteries are almost not distinguishable by hearing, smell, or taste, they can be distinguished from other wastes 562 based on sight and touch. As other wastes 562, for example, spray cans belonging to harmful waste can be distinguished from other wastes 562 by smell (thinner smell or the like) in addition to sight and touch.

In the next Step 590, the attribute information of the picking target is read from the target-attribute information database (DB), and the process proceeds to Step 592 to execute collation of the attribute information. That is, the read attribute information is collated with the detected attribute information.

In the next Step 594, a place that matches as a result of the collation is set as a picking position, and coordinates of the picking position (three-dimensional coordinates set in the space inside the box body 560) are specified. Then, the process proceeds to Step 596, the specified coordinates of the picking position are sent to the picking control portion, and this routine ends. The picking control portion controls the gripping portion 20 on the basis of the specified picking position coordinates to pick the waste 562 that is a target.

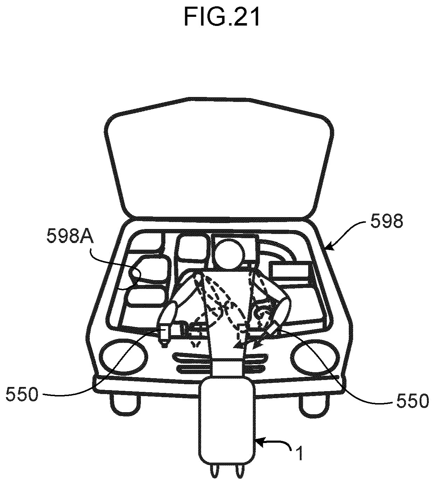

In the sixth embodiment, the work of sorting and picking the waste has been shown as an example. However, as an example of the work with the different sensor portions 551A to 551E attached to the respective fingertips of the hand tool 50, the inside of an engine room 598A of a vehicle 598 can be inspected as shown in Fig. 21.

The humanoid robot 1 faces the engine room 598A and uses the hand tool 50 according to the sixth embodiment, so that by inspecting the engine room 598A, it is possible to collectively detect defects such as oil leakage from an engine, damage and cracks on resin products or rubber products, loose bolts or the like, and poor contact and falling off of electrical components together with the specification of the place.

### (Seventh Embodiment "Work Process Automation")

Hereinafter, a seventh embodiment of the disclosure will be described. In the seventh embodiment, the robot tool 21EX described in the first embodiment is applied for description. In the following, repair work will be described as an example of work, but the work is not limited to repair. The work may be two-stage work such as assembling, disassembling, packing, painting, washing, or the like, in which the work process is automatically decided before work and the work is performed on the basis of the decided work process.

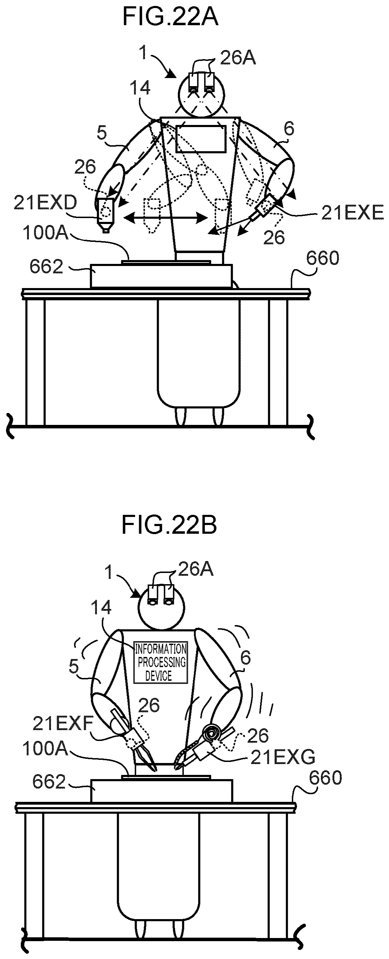

As shown in Figs. 22A and 22B, a work stand 662 is provided on a table 660, and a target 100A (here, an electronic circuit board or the like is assumed) that needs to be repaired is placed thereon.

The humanoid robot 1 faces the table 660. To the arm portions 5 and 6 of the humanoid robot 1, robot tools 21EXD and 21EXE are respectively attached in Fig. 22A, and robot tools 21EXF and 21EXG are respectively attached in Fig. 22B.

As shown in Fig. 22A, the robot tool 21EXD is a tool having a camera function, the robot tool 21EXE is a tool having a tester function, and each of them is classified into an inspection tool group. The camera function here may be the high-resolution camera carried on the palm sensor 26 permanently installed on the humanoid robot 1, a monitoring camera 26A attached to a portion corresponding to an eye of the humanoid robot 1, or the like, and includes special cameras such as a high-magnification microscope camera, an endoscopic camera, and an infrared camera depending on the size and shape of a target.

As shown in Fig. 22B, the robot tool 21EXF is a tool having a tweezer function, the robot tool 21EXG is a tool having a soldering iron function, and each of them is classified into a repair tool group.

As shown in Fig. 22A, the humanoid robot 1 on which the robot tools 21EXD and 21EXE belonging to the inspection tool group are mounted inspects the target 100A, analyzes a site to be repaired, a repair procedure, and the like, and decides a repair work process. For the decision by analysis, for example, AI is used to learn related repair work with reference to past repair work big data and the like from detected image data and the like, and an optimum repair process for the current repair is decided on the basis of the retrieved repair work and in consideration of a schedule, a work environment, a component procurement status, and the like. The decision of the repair work process is not limited to the AI analysis.

As shown in Fig. 22B, in the humanoid robot 1, the robot tools 21EXD and 21EXE belonging to the inspection tool group are replaced with the robot tools 21EXF and 21EXG belonging to the repair tool group to execute the repair work on the basis of the decided work process.

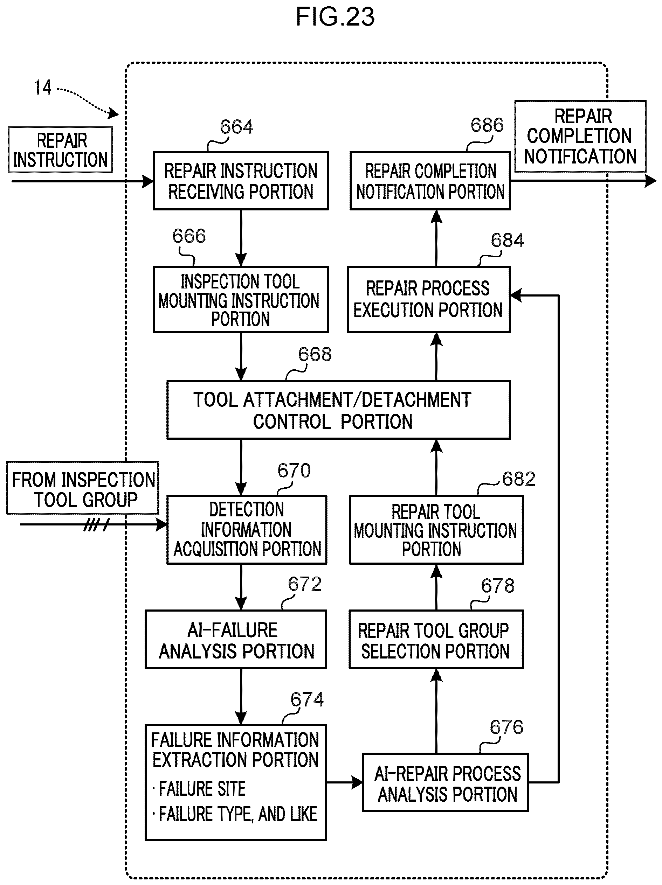

Fig. 23 is a functional block diagram specialized for control of the repair work according to the seventh embodiment, which is executed by the information processing device 14 of the humanoid robot 1. The blocks in Fig. 23 do not limit the hardware configuration of the information processing device 14, and some or all of the blocks may be operated by a software program.

As shown in Fig. 23, a repair instruction receiving portion 664 is connected to an inspection tool mounting instruction portion 666. In a case where the repair instruction receiving portion 664 receives a repair instruction, the repair instruction receiving portion 664 activates the inspection tool mounting instruction portion 666. In a case where the inspection tool mounting instruction portion 666 receives an activation instruction, the inspection tool mounting instruction portion 666 instructs a tool attachment/detachment control portion 668 to mount the robot tool (in Fig. 22A, the robot tools 21EXD and 21EXE) belonging to the inspection tool group.

In accordance with the instruction from the inspection tool mounting instruction portion 666, the tool attachment/detachment control portion 668 controls the mounting of the robot tool belonging to the inspection tool group on the humanoid robot 1. Therefore, as shown in Fig. 22A, the robot tools 21EXD and 21EXE are mounted on the humanoid robot 1.

The tool attachment/detachment control portion 668 is connected to a detection information acquisition portion 670. In a case where the detection information acquisition portion 670 receives completion of the mounting from the tool attachment/detachment control portion 668, the detection information acquisition portion 670 acquires detection information from the mounted inspection tool group.

The detection information acquisition portion 670 is connected to an AI-failure analysis portion 672 and sends the detection information to the AI-failure analysis portion 672.

The AI-failure analysis portion 672 specifies a failure site by analysis using AI, and analyzes failure information including a failure state, a relationship with past failures, components required for repair, a repair time, and the like. In greater detail, the AI-failure analysis portion 672 has a learned model that has previously learned the correspondence between images and sensor information at the time of failure and failure patterns, and by inputting the detection information obtained from images, sensor information, and the like to the learned model, failure information can be obtained. The failure information analyzed by the AI-failure analysis portion 672 is extracted by a failure information extraction portion 674 and sent to an AI-repair process analysis portion 676.

The AI-repair process analysis portion 676 decides a repair process (work process) on the basis of the failure information. The Al-repair process analysis portion 676 is connected to a repair tool selection portion 678 and a repair process execution portion 680.

The repair tool selection portion 678 selects a robot tool belonging to a necessary repair tool group on the basis of the decided repair process, and activates a repair tool mounting instruction portion 682. In a case where the repair tool mounting instruction portion 682 receives an activation instruction, the repair tool mounting instruction portion 682 instructs the tool attachment/detachment control portion 668 to mount the robot tool (in Fig. 22B, the robot tools 21EXF and 21EXG) belonging to the repair tool group.

In accordance with the instruction from the repair tool mounting instruction portion 682, the tool attachment/detachment control portion 668 controls the mounting of the robot tool belonging to the inspection tool group on the humanoid robot 1. Therefore, as shown in Fig. 22B, the robot tools 21EXF and 21EXG are mounted on the humanoid robot 1.

The tool attachment/detachment control portion 668 is connected to the repair process execution portion 680. The repair process execution portion 680 executes repair using the robot tools 21EXF and 21EXG on the basis of the repair process received from the AI-repair process analysis portion 676.

The repair process execution portion 680 is connected to a repair completion notification portion 684. In a case where the repair is completed, a repair completion notification is sent from the repair completion notification portion 684.

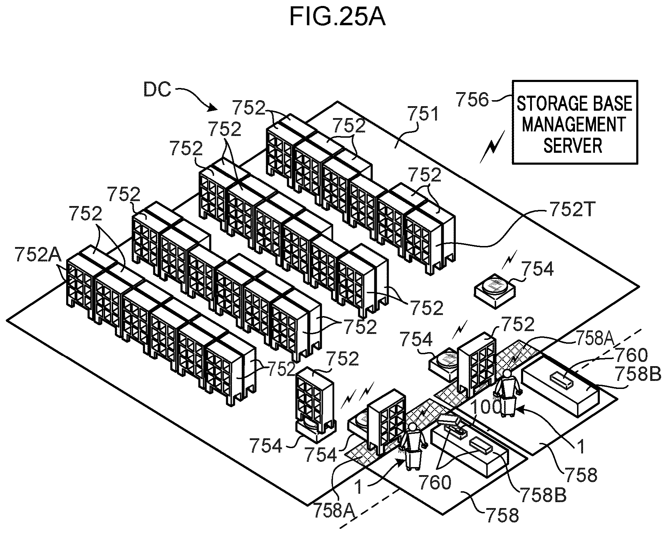

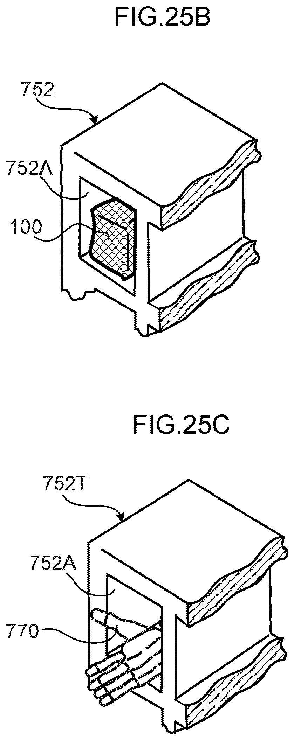

Hereinafter, actions of the seventh embodiment will be described with reference to the flowchart of Fig. 25.

In Step 300, it is determined whether a repair request has been received. In a case where a negative determination is made, this routine ends. In addition, in a case where an affirmative determination is made in Step 300, the process proceeds to Step 302 to issue an instruction to mount a mounting tool for inspection, and the process proceeds to Step 304.

In Step 304, the mounting of the tool, i.e., the robot tools 21EXD and 21EXE in Fig. 22A, is executed, and the process proceeds to Step 306.

In Step 306, detection information is acquired from the mounted inspection tool group (in Fig. 22A, the robot tools 21EXD and 21EXE). Then, the process proceeds to Step 308 to execute failure analysis by AI.

In the next Step 310, failure information (a failure state, a relationship with past failures, components required for repair, a repair time, and the like) is extracted from the analysis result by AI in Step 308, and the process proceeds to Step 312.

In Step 312, a repair process using AI is decided in consideration of the extracted failure information, a schedule, a work environment, a component procurement status, and the like. That is, the humanoid robot 1 decides, instead of the repair based on the predetermined sequence, the optimum repair process at that time, which can be regarded as a fast and proper repair process.

In the next Step 314, the repair tool group necessary for repair is selected, and then the process proceeds to Step 316 to issue an instruction to remove the inspection tool group mounted on the humanoid robot 1 and mount the repair tool group. The process proceeds to Step 318.

In Step 318, the mounting of the tool, i.e., the robot tools 21EXF and 21EXG in Fig. 22B, is executed, and the process proceeds to Step 320.

In Step 320, the repair is executed on the basis of the decided repair process. After completion of the repair, the process proceeds to Step 322 to give a repair completion notification, and this routine ends.

As described above, in the seventh embodiment, the humanoid robot 1 on which the robot tools 21EXD and 21EXE belonging to the inspection tool group are mounted inspects the target 100A, analyzes a site to be repaired, a repair procedure, and the like, and decides a repair work process.

Next, in the humanoid robot 1, the robot tools 21EXD and 21EXE belonging to the inspection tool group are replaced with the robot tools 21EXF and 21EXG belonging to the repair tool group to execute the repair work on the basis of the decided work process. Therefore, the humanoid robot 1 decides, instead of the repair based on the predetermined sequence, the optimum repair process at that time, and continuously performs the repair, so that fast and proper repair can be executed.

In the seventh embodiment, a configuration is provided in which the robot tool 21EX is selected from the inspection tool group or the repair tool group and mounted, but different inspection tools or repair tools may be attached to the fingertips of the hard tool 50 described in the second embodiment, respectively.

In the seventh embodiment to which the hand tool 50 is applied, an inspection tool group including a camera tool and a tester tool and a repair tool group including a soldering iron tool, a screwdriver tool, and a tweezer tool are mounted on first joint portions 51 of five fingers, and thus it is possible to continuously perform the process from inspection to repair in a single meeting with the target. In addition, the left hand may be used for inspection, and the right hand may be used for repair.

The automation of the work process described above has been described specifically for repair work, but can also be applied to a series of work different from repair, such as opening a box, taking out components in the box, assembling the taken out components, and repacking an assembled product.

That is, in the seventh embodiment, in various types of work, it is possible to automatically decide a work process in a case where no work schedule is provided and different operations are handled each time (repair, assembling, manufacturing, or the like).

(Example 1) Using a learned model, the estimation of components is performed from a label or a packing form of a box containing the components, and tools for opening -> assembling -> repacking are selected to sequentially perform the work.

(Example 2) The learned model is re-learned on the basis of the actual work process to optimize the work process.

In this manner, instead of creating a work plan first, for example, it is possible to select a work plan and necessary tools while determining the state of the target by image analysis using AI.

### (Eighth Embodiment "Efficient Robot Tool Replacement")

Hereinafter, an eighth embodiment will be described. In the eighth embodiment, the same configurations as those in the first to seventh embodiments will be denoted by the same reference numerals, and description of the configurations will be omitted.

In the eighth embodiment, the humanoid robot 1 executes, as main work, loading work and unloading work of the cargo 100 that is a target.

The eighth embodiment is characterized in that, assuming a situation where, in a case where a necessary tool 770 (the tool 770 is a generic term for the gripping portion 20, the robot tool 21, and the hand tool 50 in the first and second embodiments) does not exist at hand in work for the target, the necessary tool 770 is taken out of a predetermined storage place and the unnecessary tool 770 is stored in a storage place, it is specialized for the work of taking out the tool 770 and the work of storing the tool 770, and aims to improve the work efficiency.

In a case where the humanoid robot 1 moves between the work site and the storage place to replace the tool 770, at least a movement time between the work site and the storage place becomes a work loss.

Therefore, in order to facilitate the work in the loading work and the unloading work of the target, the storage place for the tool 770 and a distribution center DC (see Fig. 25A) that stores targets are set to be placed in the same area.

Hereinafter, the distribution center DC will be described with reference to Figs. 25A to 25C.

### (Configuration of Distribution Center)

Fig. 25A is a perspective view of a storage base 751 that is a warehouse of the distribution center DC according to the embodiment and stores the cargo 100 (see Fig. 25B) as a target.

In the storage base 751, a plurality of shelves 752 (some of which have indices) are disposed. For example, six shelves 752 are arranged in one row, and a so-called "island" is formed in units of two rows. The formation of islands, the number of shelves 752, and the like are not limited to the arrangement in Fig. 25A.

As shown in Fig. 25B, the shelf 752 is provided with a plurality of housing spaces 752A, and the cargo 100 can be housed in each housing space 752A.

In the storage base 751, a plurality of transport devices 754 are disposed to be movable within the storage base 751.

An operation of a transport device 754 is controlled by a command from a storage base management server 756 that collectively manages control target devices in the storage base 751. For example, the transport device 754 moves between a predetermined standby position, a position where the shelves 752 are arranged, and a picking station 758.

The transport device 754 facing the shelf 752 can enter a gap in a lower portion of the shelf 752 and lift the shelf 752 so that the shelf 752 can float from a floor surface of the storage base 751. Therefore, the shelf 752 can be moved to a desired position by the movement of the transport device 754.

A plurality of picking stations 758 are disposed at predetermined positions in the storage base 751. Although two picking stations 758 are shown in Fig. 25A, one or three or more picking stations 758 may be provided. The humanoid robot 1 is disposed for each picking station 758.

The humanoid robot 1 executes commanded work on the basis of the cooperation with the information processing device 14 (see Fig. 5) carried on the humanoid robot 1 under the management of the storage base management server 756.

That is, in each picking station 758, in a case where the shelf 752 is disposed in a frontage 758A of the picking station 758 by the transport device 754, the humanoid robot 1 performs loading work and unloading work of the cargo 100 in response to a command from the storage base management server 756.

The loading work and the unloading work are controlled by the information processing device 14 (see Fig. 5) of each humanoid robot 1.

In the picking station 758, a work space 758B for sorting and packing is installed together with the frontage 758A in which the shelf 752 is disposed.

The unloading work is work of taking out the cargo 100 housed in the shelf 752 according to the destination, classifying the cargo 100 for each sorting destination, and packing the cargo 100 in a box 760 (transport member) for each sorting destination.

The loading work is work of classifying the cargo 100 arriving at the warehouse for each shelf 752 as a housing destination, and arranging the classified cargo 100 in a predetermined position on the shelf 752.

In the example, each work in the unloading work and each work in the loading work are defined as follows.

### (Unloading Work 1) Picking Work

The humanoid robot 1 takes out the designated cargo 100 from the shelf 752 arriving at the frontage 758A, and moves the cargo 100 to the work space 719.

### (Unloading Work 2) Assorting Work

The cargo 100 taken out to the work space 758B is housed in the box 760 corresponding to the destination, and the box is packed.

### (Unloading Work 3) Unloading Work

The picking work for the shelf 752 disposed in the frontage 758A is completed, and the next shelf 752 is requested.

### (Loading Work 1) Picking Work

The requested cargo 100 is taken out of the truck or pallet arriving at the frontage 758A, and moved to the work space 758B.

### (Loading Work 2) Assorting Work

The cargo 100 taken out to the work space 758B is housed in the shelf 752 corresponding to the storage destination.

### (Loading Work 3) Loading Work

The assorting work for the shelf 752 disposed in the frontage 758A is completed, and the next shelf 752 is requested.

Here, the information on the work of each humanoid robot 1 is sequentially sent from the information processing device 14 of the humanoid robot 1 to the storage base management server 756. Therefore, the operation states (work progress information) of a plurality of the humanoid robots 1 are collectively managed in the storage base management server 756.

Here, as shown in Fig. 25A, some shelves 752 serve as tool storage shelves 752T in which tools 770 to be mounted on the arm portions 5 and 6 of the humanoid robot 1 are stored, unlike the shelves 752 that house the cargo 100. The tools 770 are housed in housing spaces 752A of the tool storage shelf 752T, respectively (see Fig. 25C).

One tool 770 is housed in one housing space 752A. However, assuming a plurality of the humanoid robots 1, the same tools 770 are preferably housed in a plurality of the housing spaces 52A. In Fig. 25A, one tool storage shelf 752T is shown, but a plurality of tool storage shelves may be provided.

The storage base management server 756 can transport the tool storage shelf 752T to the picking station 758 with the same control as the control for transporting the cargo 100 to the picking station 758 by controlling the transport device 754.

That is, by notifying the storage base management server 756 of a request to replace the tool 770 from the humanoid robot 1 working in the picking station 758, the humanoid robot 1 can wait for the arrival of the tool storage shelf 752T while continuing the work in the picking station 758.

The humanoid robot 1 executes an operation of picking the necessary tool 770 from the arrived tool storage shelf 752T, and returning the tool 770 currently mounted to the tool storage shelf 752T.

In other words, there is no work loss due to the movement time between the work site and the storage place.

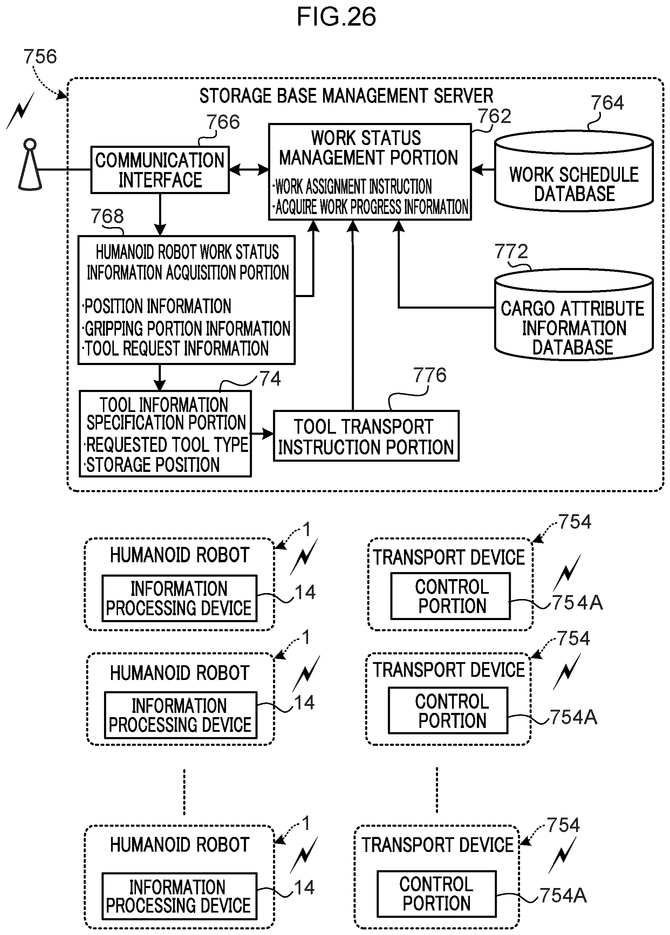

Fig. 26 is a functional block diagram for executing simultaneous work-in-progress control, which is executed with the cooperation of the storage base management server 756 with each information processing device 14 of the humanoid robot 1.

The storage base management server 756 includes a work status management portion 762. The work status management portion 762 is connected to a work schedule database 764 and a communication interface 766.

The communication interface 766 communicates with the information processing device 14 of the humanoid robot 1 and a control device 754A of the transport device 754 to exchange information.

The work status management portion 762 sequentially acquires work schedule information from the work schedule database 764, and acquires work progress information of a control target (the information processing device 14 of the humanoid robot 1 and the control device 754A of the transport device 754) that executes the work in the storage base 751 via the communication interface 766, thereby managing the work schedule including an instruction to assign the next work.

The communication interface 766 is connected to a humanoid robot work status information acquisition portion 768. The humanoid robot work status information acquisition portion 768 acquires information on the work status (for example, whether a notification of a request to replace the tool 770 is output, in addition to the position of the picking station 758, the identification of the shelf 752 disposed in the frontage 758A, and the like) when the humanoid robot 1 is working, and acquires detailed information on the specific work in the unloading or loading work and the tool replacement work.

In a case where the acquired information is work progress information (position information and gripping portion information of the humanoid robot 1), the humanoid robot work status information acquisition portion 768 notifies the work status management portion 762 of the acquired information to create the subsequent work plan, and a work assignment instruction or the like is executed.

In addition, in a case where the acquired information is tool request information, the humanoid robot work status information acquisition portion 768 sends the acquired information to a tool information specification portion 774. The tool information specification portion 774 specifies a requested tool type and a storage position on the basis of the tool request information, and the information on the specified requested tool type and the storage position is sent to a tool transport instruction portion 776.

The tool transport instruction portion 776 is connected to the work status management portion 762. In a case where it is determined that it is necessary to transport the tool 770 (taking-out work and storage work), the tool transport instruction portion 776 instructs the work status management portion 762 to perform the tool replacement work so as to interrupt the normal unloading work or loading work.

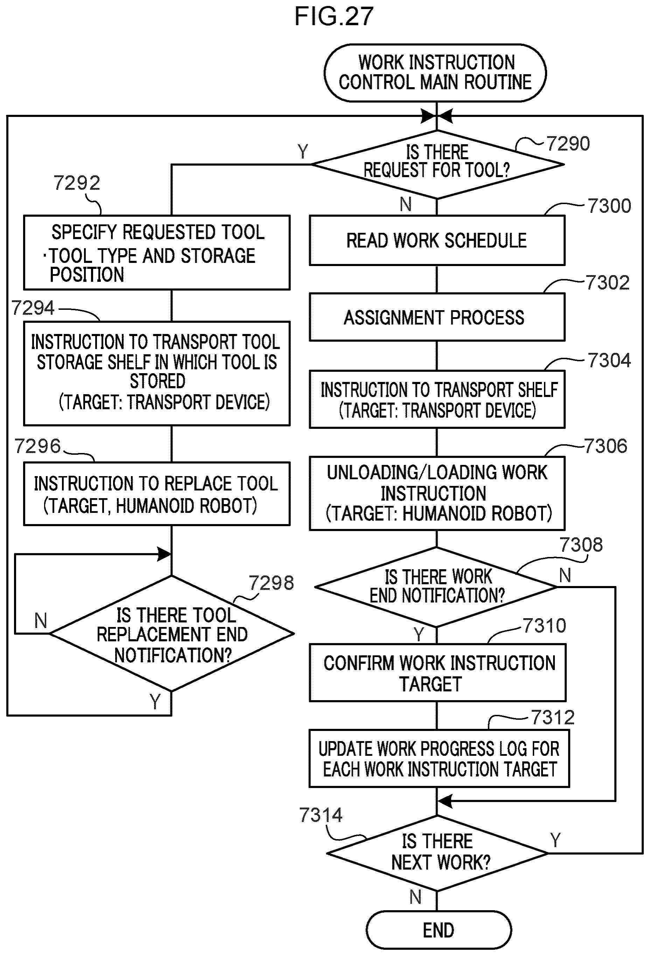

Fig. 27 is a flowchart showing a main routine of normal work instruction control based on a work schedule by a storage base management server 756, which is executed in the storage base 751 (see Fig. 25A).

In Step 7290, it is determined whether there is a request (tool transport instruction) for the tool 770. In a case where a negative determination is made, the process proceeds to Step 7300 to execute the normal unloading work or loading work.

In addition, in a case where a negative determination is made in Step 7290, the process proceeds to Step 7292 to execute the tool transport work.

### (Tool Transport Work)

In Step 7292, the requested tool 770 is specified. That is, the tool type and the storage position are specified, and the process proceeds to Step 7294.

In Step 7294, the control device 754A of the transport device 754 is instructed to transport the tool storage shelf 752T in which the tool 770 is stored.

In Step 7296, the information processing device 14 of the humanoid robot 1 is instructed to replace the tool, and the process proceeds to Step 7298.

In response to the instruction given to the control device 754A of the transport device 754 through Step 7294 and the instruction given to the information processing device 14 of the humanoid robot 1 through Step 7296, the transport device 754 and the humanoid robot 1 execute the replacement of the tool 770 by executing their respective processes.

In Step 7298, it is determined whether there is a tool replacement end notification. In a case where an affirmative determination is made, the process returns to Step 7290.

### (Unloading Work and Loading Work)

In Step 7300, the work schedule is read, and then the process proceeds to Step 7302 to execute an assignment process. The assignment process in Step 7302 can be executed by using a worksheet or the like describing which shelf 752 is to be transported by which transport device 754 to which picking station 758, and which humanoid robot 1 is to execute the unloading work or the loading work.

In the next Step 7304, the transport device 754 is instructed to transport the shelf 752. Then, in Step 7306, the humanoid robot 1 is instructed to perform the unloading work or the loading work, and the process proceeds to Step 7308.

In Step 7308, it is determined whether there is a work end notification. In a case where an affirmative determination is made, the process proceeds to Step 7310 to confirm a work instruction target. Then, the process proceeds to Step 7312 to update a work progress log for each work instruction target, and the process proceeds to Step 7314.

In addition, in a case where there is no work end notification in Step 7308, the process proceeds to Step 7314 to continuously perform another work.

In Step 7314, it is determined whether there is the next work. In a case where an affirmative determination (there is the next work) is made, the process returns to Step 7290, and the above-described process is repeated. In addition, in a case where a negative determination (there is no next work) is made in Step 7314, this routine ends.

As described above, in the eighth embodiment, in a case where a necessary tool 770 does not exist at hand in work for the target, the normal unloading work or loading work is interrupted, and work of transporting the shelf 752 (transport of the tool storage shelf 752T) using the transport device 754, which is equivalent to the unloading work or the loading work, is executed. Therefore, the movement of the humanoid robot 1 between the work site and the storage place is omitted, and the work is performed in parallel with the normal unloading work or loading work, so that it is possible to eliminate a work loss due to the replacement of the tool 770.

In the eighth embodiment, the transport device 754 is used for the shelf 752 (and the tool storage shelf 752T), but the humanoid robot 1 may be applied instead of the transport device 754.

That is, one humanoid robot 1 may transport the tool 770 during normal work involving moving to the shelf 752 of the storage base 751 to take out the cargo 100 and then moving to the picking station 758 to perform work and unload the cargo 100, or performing work on the loaded cargo 100 in the picking station 758 to put the cargo 100 in the shelf.

In this case, the humanoid robot 1 that serves as a substitute for the transport device and the humanoid robot 1 that works in the picking station 758 may be the same or different.

### (Ninth Embodiment)

Hereinafter, a ninth embodiment will be described. In the ninth embodiment, the same configurations as those in the first to eighth embodiments will be denoted by the same reference numerals, and description of the configurations will be omitted.

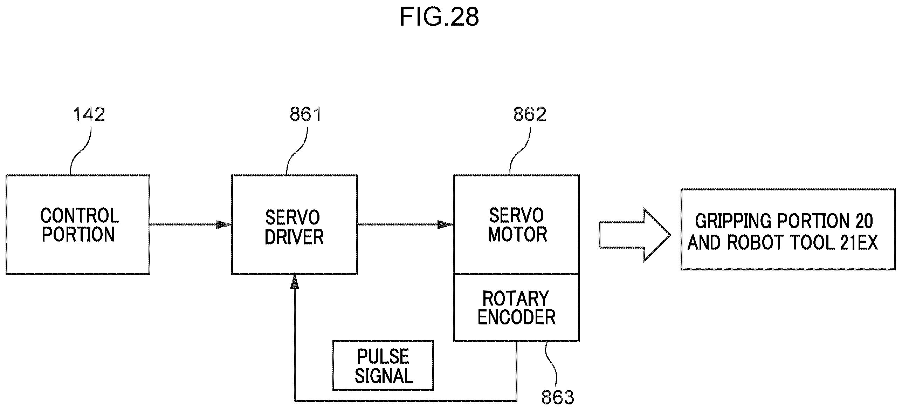

Fig. 28 shows a specific example of a configuration for controlling the operations of the gripping portion 20 and the robot tool 21EX by the control portion 142.

As shown in Fig. 28, the control portion 142 controls the operations of the gripping portion 20 and the robot tool 21EX via a servo mechanism including a servo driver 861, a servo motor 862 for operating the gripping portion 20 and the robot tool 21EX, and a rotary encoder 863.

The operations of the gripping portion 20 and the robot tool 21EX are controlled by a rotation operation of the servo motor 862. Information such as a rotation speed and a rotation position of the servo motor 862 is detected by the rotary encoder 863 and fed back to the servo driver 861 as a pulse signal.

The servo driver 861 functions as a drive device for driving the servo motor 862, and controls the output torque, rotation speed, and rotation position of the servo motor 862 on the basis of an operation instruction from the control portion 142. In that case, the servo driver 861 receives a pulse signal from the rotary encoder 863 as input, and detects the actual rotation position, rotation speed, and output torque of the servo motor 862, thereby executing a process in which the servo motor 862 performs an operation that matches an operation instruction from the control portion 142.

Then, in a case where the type of work determined by the determination portion 141 is a type of work other than gripping of the cargo 100, the control portion 142 performs control to mount the robot tool 21EX corresponding to the above type of work among the one or more robot tools 21EX on the arm portions 5 and 6. Then, the control portion 142 controls the servo driver 861 in a control mode corresponding to the type of work determined by the determination portion 141 to execute work corresponding to the determined type of work on the cargo 100.

For example, in a case where the control mode for the servo driver 861 includes a high-load work control mode and a precision work control mode, the control portion 142 switches the control mode so that the servo driver 861 operates in a control mode set previously for each type of work.

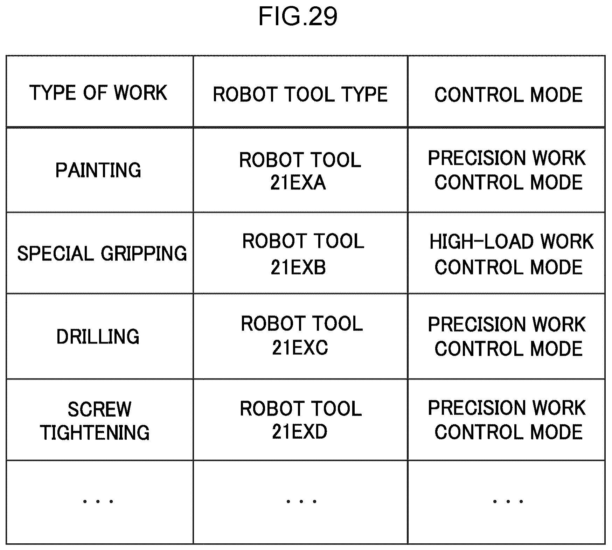

An example of an aspect in which the control mode is set for each type of work as above is shown as a control mode selection table in Fig. 29.

Referring to the control mode selection table of Fig. 29, it is found that, in a case where the type of work is painting, drilling, or screw tightening, the precision work control mode is selected, and in a case where the type of work is special gripping, the high-load work control mode is selected.

In this manner, in a case where it is determined that work to be executed on the cargo 100 is high-load work, the control portion 142 controls the servo driver 861 in the high-load work control mode. In a case where work to be executed on the cargo 100 is low-load work, the control portion 142 controls the servo driver 861 in the precision work control mode.

In addition, the determination portion 141 may estimate not only the type of work to be executed on the cargo 100, but also the work load in a case where the work is executed on the cargo 100. For example, the determination portion 141 estimates the work load on the basis of the determined type of work, properties of the cargo 100 that is a work target, and the like.

The determination portion 141 estimates the type of work to be executed on the cargo 100 and the work load in a case where the work is executed, on the basis of information from the palm sensor 26 carried on the gripping portion 20 or the robot tool 21EX and including a camera that captures an image of the cargo 100 to identify the type of the cargo 100 and an MoPU that specifies a position of the cargo 100.

For example, the determination portion 141 estimates a weight of the cargo 100 to be gripped from the size (and surface material, and the like), and in a case where it is determined that it is difficult to lift the cargo 100 by normal gripping using the gripping portion 20, the determination portion 141 determines that the type of work to be executed on the cargo 100 is special gripping (strength-up gripping). In addition, for example, in a case where the type of work to be executed is drilling and the material of the cargo 100 that is a work target is metal, the determination portion 141 estimates that the work load increases in a case where the work is executed.

In such a case, the control portion 142 controls the servo driver 861 in a control mode corresponding to the type of work and the work load determined by the determination portion 141 to execute work corresponding to the type of work on the cargo 100.

In addition, the control portion 142 may select any control mode from a position control mode, a speed control mode, or a torque control mode in accordance with the type of work determined by the determination portion 141 to control the servo driver 861.

Furthermore, the control portion 142 may change a resolution of a pulse signal from the rotary encoder 63 by changing a multiplication number in a case where the pulse signal from the rotary encoder 863, which is a detector that detects the rotation operation of the servo motor 862, is multiplied in the servo driver 61 in accordance with the type of work determined by the determination portion 141, to control the servo driver 61.

For example, a case where the number of pulses generated in the rotary encoder 863 during one rotation of the servo motor 862 is 1024, that is, a case of 1024 pulses/rotation will be described. In such a case, in a case where a pulse signal in the servo driver 861 is multiplied by 2, the result is 2048 pulses/rotation, and in a case where the pulse signal is multiplied by 4, the result is 4096 pulses/rotation. Therefore, by increasing the multiplication number, a rotation angle per pulse is reduced, and this enables more precise positioning, thereby realizing a high-precision control system.

Hereinafter, operations of the robot control system according to the embodiment will be described in detail with reference to the drawing.

### (Control of Execution of Work on Cargo 100)

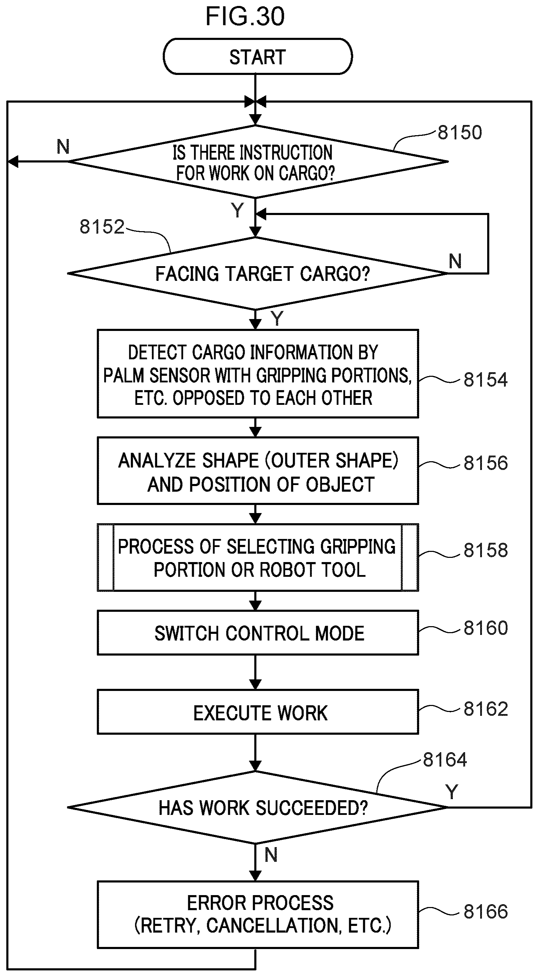

Fig. 30 is a flowchart showing a control procedure in a case where work is executed on the cargo 100 by the gripping portion 20 or the robot tool 21EX.

In Step 8150, it is determined whether an instruction to execute work on the cargo 100 has been issued. In a case where an affirmative determination is made, the process proceeds to Step 8152, and the humanoid robot 1 is moved (for example, the arm portions 5 and 6 are operated) to cause the gripping portion 20 to face the target cargo 100. Then, the process proceeds to Step 8154.

In Step 8154, the gripping portion 20 is opposed to the cargo 100, and information about the cargo 100 is detected by the palm sensor 26 (the high-resolution camera and the MoPU).

In the next Step 8156, the detection information obtained by the palm sensor 26 is analyzed to grasp the type (shape, size, hardness, and the like) and position of the cargo 100 in detail, and the process proceeds to Step 8158.

In Step 8158, the type of work to be executed on the cargo 100 is determined, and the robot tool 21EX corresponding to the determined type of work is selected from the gripping portion 20 or the robot tool 21EX and mounted on the arm portions 5 and 6. Then, the process proceeds to Step 8160.

In Step 8160, the control mode for the servo driver 861 is switched to a control mode corresponding to the determined type of work.

In Step 8162, the work is executed on the cargo 100 using the gripping portion 20 or the robot tool 21EX.

In the next Step 8164, it is determined whether the execution of the work on the cargo 100 has succeeded. In a case where an affirmative determination is made, the cargo 100 on which the work has been executed is conveyed to a predetermined place, and the process proceeds to Step 8150 to wait for an instruction to execute the work on the next cargo 100.

In a case where a negative determination is made in Step 8164, the process proceeds to Step 8166 to execute an error process such as retry or cancellation. For example, as an error process, switching to work of a type different from the type of work determined by the determination portion 141 may be performed. In addition, as a retry process for a case where an error has occurred, a control setting may be changed such as changing a multiplication number for multiplying the pulse signal in the servo driver 861.

Furthermore, in the robot control system according to the embodiment, even in a case where not only the work of simply conveying the cargo 100 that is a target but also the work of performing painting or drilling using a drill is executed on the cargo 100, by replacing the gripping portion 20 to be mounted on the arm portions 5 and 6 with the robot tool EX, various types of work can be executed by more simple control than in a case where the work is performed by gripping various tools with the gripping portion 20.

In the embodiment, by changing the control mode in the control of the servo motor 862 for operating the gripping portion 20 and the robot tool 21EX in accordance with the type of work to be executed on the cargo 100, various types of work having different work contents can be appropriately executed using the same servo motor 862.

### (Tenth Embodiment)

Hereinafter, a tenth embodiment will be described. In the tenth embodiment, the same configurations as those in the first to ninth embodiments will be denoted by the same reference numerals, and description of the configurations will be omitted.

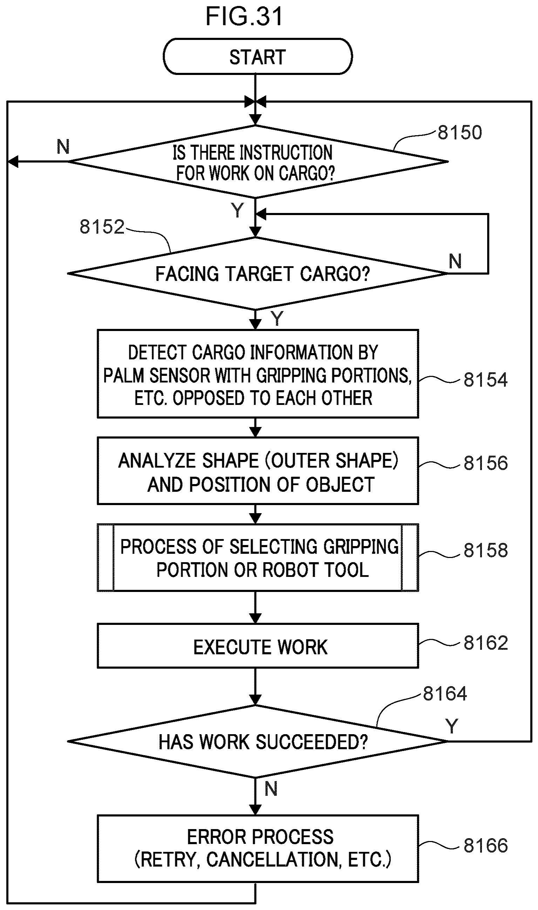

Fig. 31 is a flowchart showing a control procedure in a case where work is executed on the cargo 100 by the gripping portion 20 or the robot tool 21EX. The flowchart of Fig. 31 differs from the flowchart of Fig. 30 in that Step 160 does not exist between Step 158 and Step 162.

### [Control of Plurality of Humanoid Robots 1]

As described above, the humanoid robot 1 according to the embodiment selects a tool corresponding to the type of work to be executed from the gripping portion 20 or the robot tool 21EX, and executes work. However, in a case where a plurality of the humanoid robots 1 work in a narrow place, the arms of adjacent humanoid robots 1 may collide with each other depending on the type of work to be executed, and the work may not be safely executed.

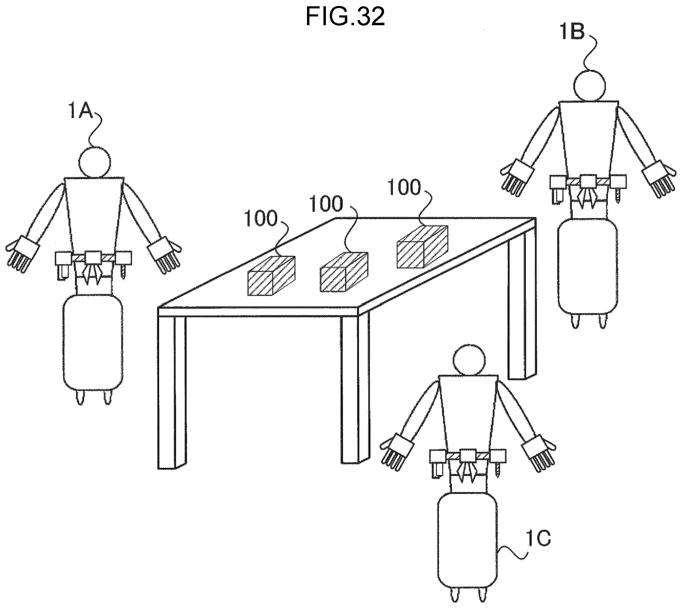

Fig. 32 shows an aspect in which the plurality of humanoid robots 1 execute work in a narrow place. Fig. 32 shows an aspect in which three humanoid robots 1A to 1C are about to execute work on three pieces of cargo 100 placed on one table, respectively.

In a case where the three humanoid robots 1A to 1C execute painting work on the three pieces of cargo 100 placed on one table, respectively, arm portions 5 and 6 that are arms of the humanoid robots 1A to 1C may collide with each other.

Therefore, in the robot control system according to the embodiment, through a method as described below, in a case where a plurality of robots work adjacent to each other, the occurrence of a situation in which the work executed by a certain robot interferes with the work of other adjacent robots is prevented.

In order to prevent the occurrence of the above-described situation, the information acquisition portion 140 acquires information on the type of the work that is about to be executed or being executed by other adjacent humanoid robots 1. For example, the information acquisition portion 140 acquires information on the type of the work that is about to be executed or being currently executed by the adjacent humanoid robot 1 via a wireless LAN such as Wi-Fi (registered trademark) or a short-distance radio communication line such as Bluetooth (registered trademark).

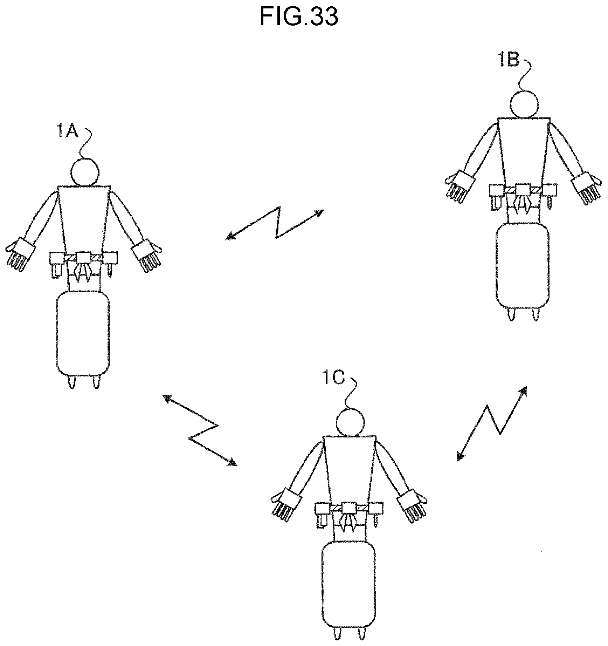

Specifically, as shown in Fig. 33, each of the humanoid robots 1A to 1C transmits and receives data to and from other adjacent humanoid robots 1 via a radio communication line, and acquires information on the type of the work that is being executed or about to be executed by other humanoid robots 1. Here, by setting a range where radio waves of the short-distance radio communication line such as Bluetooth (registered trademark) reach as an adjacent range, the humanoid robots 1A to 1C can adjust the size of the adjacent range by setting the radio wave intensity of each transmitted radio wave. The range where radio waves reach may be a range where radio waves of sufficient intensity reach to prevent erroneous transmission and reception.

Then, the control portion 142 determines whether the type of work determined by the determination portion 141 is a type of work that cannot be executed adjacent to the type of work of other adjacent humanoid robots 1 acquired by the information acquisition portion 140. In a case where it is determined that the type of work determined by the determination portion 141 is a type of work that cannot be executed adjacent to the type of work of other adjacent humanoid robots 1 acquired by the information acquisition portion 140, the control portion 142 performs control so that the type of work determined by the determination portion 141 is not executed on the target.

For example, a combination of the types of work that cannot be simultaneously executed by two adjacent humanoid robots 1 is set on the basis of the contact possibility according to the sizes of the work ranges of the types of work.

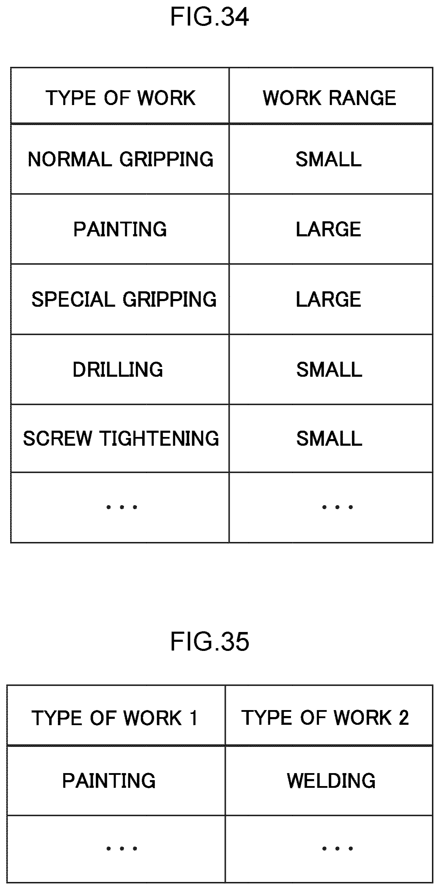

Specifically, a work range setting table as shown in Fig. 34 is stored in each of the humanoid robots 1A to 1C. In the work range setting table shown in Fig. 34, a work range is set for each type of work. For example, a type of work "normal gripping" is set to have a "small", that is, narrow, work range, and a type of work "painting" is set to have a "large", that is, wide, work range.

The control portion 142 determines that, in a case where the work range of the type of work to be executed by the humanoid robot 1 with the above control portion 142 carried thereon, and the work range of the type of work that is being executed or about to be executed by the adjacent humanoid robots 1 are both "large", the above two types of work cannot be executed by the adjacent humanoid robots 1.

Alternatively, the combination of the types of work that cannot be simultaneously executed by two adjacent humanoid robots 1 may be set on the basis of safety reason accompanied by a (dangerous) chemical reaction.

For example, an adjacent work prohibition table as shown in Fig. 35 is stored in each of the humanoid robots 1A to 1C. In the adjacent work prohibition table shown in Fig. 35, a type of work "painting" and a type of work "welding" are registered as a combination of the types of work that cannot be simultaneously executed by two adjacent humanoid robots 1.

As described above, in the robot control system according to the embodiment, the work range setting table and the adjacent work prohibition table, which are the information on the combinations of the types of work that cannot be simultaneously executed by two adjacent humanoid robots 1, are stored in each of the plurality of humanoid robots 1A to 1C.

Moreover, in a case where it is determined that the type of work determined by the determination portion 141 is a type of work that cannot be executed adjacent to the type of work of other adjacent humanoid robots 1 acquired by the information acquisition portion 140, the control portion 142 performs control so that a type of work other than the type of work determined by the determination portion 141 is executed on the target.

Alternatively, in a case where it is determined that the type of work determined by the determination portion 141 is a type of work that cannot be executed adjacent to the type of work of other adjacent humanoid robots 1 acquired by the information acquisition portion 140, the control portion 142 may move the humanoid robot 1 with the above control portion 142 carried thereon from the current position so that the type of work of other adjacent humanoid robots 1 and the type of work to be executed by the humanoid robot 1 are not a combination of the types of work that cannot be executed adjacent to each other.

In the plurality of humanoid robots 1A to 1C, in a case where the control is performed as described above, for example, priority can be given to work already in progress, and the work can be realized by not executing the work that is about to start later, or by moving the humanoid robot 1.

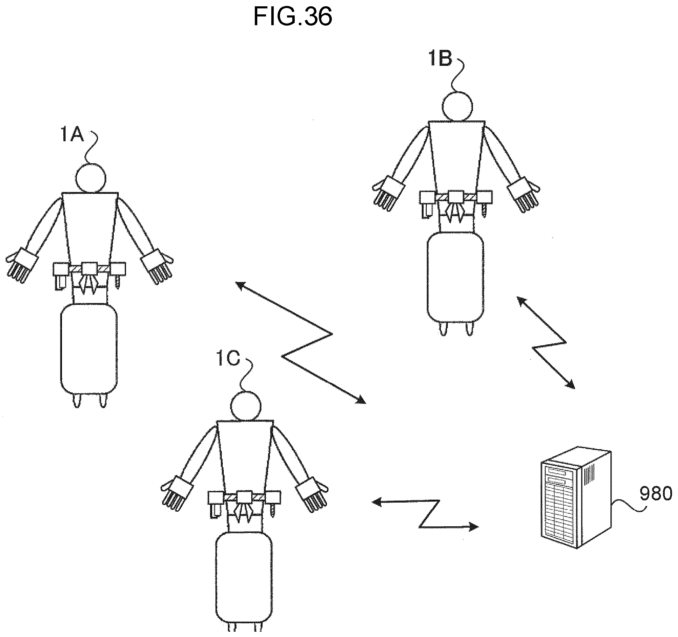

As another method, for example, as shown in Fig. 36, a method may be considered in which a management server 980 for managing the operations of the plurality of humanoid robots 1A to 1C is installed.

In a case where the method is used, the work range setting table and the adjacent work prohibition table, which are the information on the combinations of the types of work that cannot be simultaneously executed by two adjacent humanoid robots 1, are stored in the management server 980 that manages the operations of the plurality of humanoid robots 1.

The management server 980 controls the operations of the plurality of humanoid robots 1 so that the two adjacent humanoid robots 1 do not execute the types of work that cannot be simultaneously executed, respectively.

Here, the management server 980 and the humanoid robots 1A to 1C are connected to each other via the wireless LAN such as Wi-Fi (registered trademark) or the short-distance radio communication line such as Bluetooth (registered trademark) described above. The management server 80 acquires, via such a radio communication line, information on the type of work that is being executed by each of the humanoid robots 1A to 1C and information on the type of work that is about to be executed. In addition, the management server 80 acquires, via such a radio communication line, current position information or information on adjacent humanoid robots 1 from the humanoid robots 1A to 1C. The management server 80 manages the work that is executed by the humanoid robots 1A to 1C on the basis of the information such as the work range setting table and the adjacent work prohibition table described above, thereby performing control so that the work prohibited from being simultaneously executed between the adjacent humanoid robots 1 is not executed.

### [Hardware Configuration Example of Information Processing Device 14]

Fig. 31 schematically shows an example of a hardware configuration of a computer 1200 that functions as the information processing device 14. A program installed in the computer 1200 can cause the computer 1200 to function as one or more "portions" of the device according to the first to tenth embodiments, or cause the computer 1200 to execute an operation associated with the device according to the first to tenth embodiments or one or more "portions" thereof, and/or cause the computer 1200 to execute a process or stages of the process according to the first to tenth embodiments. Such a program may be executed by being loaded into a CPU 1212 as an example of a hardware processor to cause the computer 1200 to execute a specific operation associated with some or all of the blocks in the flowcharts and block diagrams described herein.

The computer 1200 according to the first to tenth embodiments includes the CPU 1212, a RAM 1214, and a graphic controller 1216, which are connected to each other by a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes input/output units such as a ROM 1230 and a keyboard, which are connected to the input/output controller 1220 via an input/output chip 1240.

The CPU 1212 is operated according to programs stored in the ROM 1230 and the RAM 1214, thereby controlling the units. The graphic controller 1216 acquires image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the computer 1200. The DVD drive reads programs or data from a DVD-ROM or the like and provides the programs or data to the storage device 1224. The IC card drive reads programs and data from and/or writes programs and data to an IC card.

The ROM 1230 stores therein a boot program or the like executed by the computer 1200 at activation, and/or a program dependent on hardware of the computer 1200. The input/output chip 1240 may also connect various input/output units to the input/output controller 1220 via a USB port, a parallel port, a serial port, a keyboard port, a mouse port, or the like.

Programs are provided by a computer-readable storage medium such as a DVD-ROM or an IC card. The programs are read from a computer-readable storage medium, installed in the storage device 1224, the RAM 1214, or the ROM 1230, which is also an example of a computer-readable storage medium, and executed by the CPU 1212. Information processes described in these programs are read by the computer 1200 to provide cooperation between the programs and the various types of hardware resources. Devices or methods may be configured by realizing the operation or process of information according to use of the computer 1200.

For example, in a case where communication is executed between the computer 1200 and an external device, the CPU 1212 may execute a communication program loaded into the RAM 1214 and instruct the communication interface 1222 to perform a communication process on the basis of the process described in the communication program. Under the control of the CPU 1212, the communication interface 1222 reads transmission data stored in a transmission buffer region provided in a recording medium such as the RAM 1214, the storage device 1224, a DVD-ROM, or an IC card and transmits the read transmission data to the network, or writes reception data received from the network to a reception buffer region or the like provided on the recording medium.

In addition, the CPU 1212 may cause the RAM 1214 to read all or a necessary portion of files or database stored in an external recording medium such as the storage device 1224, a DVD drive (DVD-ROM), or an IC card, and may execute various types of processes on the data on the RAM 1214. Next, the CPU 1212 may write back the processed data to the external recording medium.

Various types of information such as various types of programs, data, tables, and databases may be stored in a recording medium and subjected to an information process. The CPU 1212 may execute, on the data read from the RAM 1214, various types of processes including various types of operations, information processes, condition determinations, conditional branching, unconditional branching, information search/replacement, and the like, which are described throughout the disclosure and specified by a program's instruction sequence, and writes back the result to the RAM 1214. In addition, the CPU 1212 may search for information in the files, database, or the like in the recording medium. For example, in a case where a plurality of entries each having an attribute value of a first attribute associated with an attribute value of a second attribute are stored in a recording medium, the CPU 1212 may search for an entry in which the attribute value of the first attribute matches a designated condition from the plurality of entries, read the attribute value of the second attribute stored in the entry, and thereby acquire the attribute value of the second attribute associated with the first attribute satisfying the predetermined condition.

The programs or software modules described above may be stored in a computer-readable storage medium on the computer 1200 or in the vicinity of the computer 1200. In addition, a recording medium such as a hard disk or a RAM provided in a server system connected to a dedicated communication network or the Internet can be used as a computer-readable storage medium, and thus provides programs to the computer 1200 via the network.

The blocks in the flowcharts and block diagrams in the first to tenth embodiments may represent stages of a process in which an operation is executed or "portions" of a device that is responsible for executing the operation. Specific stages and "portions" may be implemented by a dedicated circuit, a programmable circuit supplied together with a computer-readable instruction stored on a computer-readable storage medium, and/or a processor supplied together with a computer-readable instruction stored on a computer-readable storage medium. The dedicated circuit may include digital and/or analog hardware circuits, and may include integrated circuits (ICs) and/or discrete circuits. The programmable circuit may include, for example, a reconfigurable hardware circuit including: logical AND, logical OR, exclusive OR, negative AND, negative OR, and other logical operations; a flip-flop; a register, and a memory element, such as a field programmable gate array (FPGA) or a programmable logic array (PLA).

The computer-readable storage medium may include a non-temporary storage medium that is any tangible device capable of storing an instruction executed by an appropriate device. As a result, the computer-readable storage medium having an instruction stored thereon includes a product including an instruction that can be executed in order to create means for executing the operation specified in the flowcharts or block diagrams. Examples of the computer-readable storage medium may include an electronic storage medium, a magnetic storage medium, an optical storage medium, an electromagnetic storage medium, and a semiconductor storage medium. More specific examples of the computer-readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disk (DVD), a Blu-ray (registered trademark) disk, a memory stick, and an integrated circuit card.

The computer-readable instruction may include an assembly instruction, an instruction-set-architecture (ISA) instruction, a machine instruction, a machine dependent instruction, a microcode, a firmware instruction, state setting data, or either a source code or an object code described in any combination of one or more programming languages, including an object oriented programming language such as Smalltalk (registered trademark), JAVA (registered trademark), or C++, and a conventional procedural programming language such as a "C" programming language or a similar programming language.

The computer-readable instruction may be provided to a general-purpose computer, a special-purpose computer, or a processor or programmable circuit of another programmable data processing device, locally or via a local area network (LAN) or a wide area network (WAN) such as the Internet so that the general-purpose computer, the special-purpose computer, or the processor or programmable circuit of another programmable data processing device executes the computer-readable instruction in order to generate means for executing the operation specified in the flowcharts or block diagrams. Examples of the processor include a computer processor, a processing unit, a microprocessor, a digital signal processor, a controller, and a microcontroller.

Although the disclosure has been described with reference to the embodiments, Claims 1 to 10 may be applied to each other. The technical scope of the disclosure is not limited to the scope described in the embodiments. It is apparent to those skilled in the art that various changes or improvements can be added to the above-described embodiments. It is apparent from the description of the claims that modes with such changes or improvements added thereto can also be included in the technical scope of the disclosure.

It should be noted that processes such as operations, procedures, steps, and stages in the devices, systems, programs, and methods shown in the claims, specification, and drawings can be executed in any order as long as the order is not specifically indicated by "before", "prior to", or the like and as long as the output from a previous process is not used in a later process. Even if the operation flow is described using "first", "next", or the like for the sake of convenience in the claims, specification, and drawings, it does not necessarily mean that the process must be performed in this order.

The disclosures of Japanese Patent Application No. 2023-034053 filed on March 6, 2023, Japanese Patent Application No. 2023-063567 filed on April 10, 2023, Japanese Patent Application No. 2023-067106 filed on April 17, 2023, Japanese Patent Application No. 2023-083462 filed on May 19, 2023, Japanese Patent Application No. 2023-087305 filed on May 26, 2023, Japanese Patent Application No. 2023-088254 filed on May 29, 2023, Japanese Patent Application No. 2023-094427 filed on June 7, 2023, Japanese Patent Application No. 2023-105298 filed on June 27, 2023, and Japanese Patent Application No. 2023-113331 filed on July 10, 2023 are incorporated herein by reference in their entirety.

## Claims

1. A control system of a robot, the robot including a gripping portion that is detachably mounted on an arm portion of the robot and attached for a main purpose of gripping a target, and one or more robot tools that are detachable at the arm portion in accordance with a type of work different from the gripping of the gripping portion and execute work corresponding to the type of work, the system comprising:
a determination portion that determines a type of work for the target;
and a control portion that controls an operation in which, in a case where the type of work determined by the determination portion meets the main purpose, the gripping portion is mounted on the arm portion, and in a case where the determination result of the determination portion indicates a type of work other than that of the main purpose, the robot tool is mounted on the arm portion, and controls an operation corresponding to the type of work.

2. The control system of a robot according to Claim 1, wherein the robot tool is mounted instead of the entire gripping portion.

3. The control system of a robot according to Claim 1, wherein the robot tool is mounted instead of a part of the gripping portion.

4. The control system of a robot according to Claim 3, wherein the gripping portion includes a plurality of finger portions, and a part of the gripping portion is on tip end sides of the finger portions.

5. The control system of a robot according to Claim 1, wherein the robot tool is attached to a plurality of finger portions forming a part of the gripping portion, and can work in a state of being separated from the finger portion in a case where a type of work given to each robot tool is executed.

6. The control system of a robot according to Claim 5, wherein the robot tool is connected to the finger portion with an extension bar, and the extension bar transmits an operation suitable for the type of work of the robot tool to the robot tool.

7. The control system of a robot according to Claim 5, wherein the robot tool is detachable from the finger portion, and an operation thereof is controlled through wireless communication or wired communication.

8. The control system of a robot according to Claim 1, wherein the determination portion makes a determination with information from a sensor portion carried on the gripping portion or the robot tool and including a camera that captures an image of the target to identify a type of the target, and a motion processing unit that specifies a position of the target.

9. A control program of a robot that causes a computer to operate as the determination portion and the control portion according to any one of Claims 1 to 8.

10. A robot management system that manages work mainly performed by a robot on which a plurality of robot tools are selectively mounted and which executes work corresponding to a type of work for a target, the system comprising:
a robot control device including a determination portion that determines a type of work for the target, and a first control portion that controls execution of work using the robot tool corresponding to the type of work determined by the determination portion, and transmits, in a case where the robot tool corresponding to the type of work is in short supply, a request notification for requesting the robot tool that is in short supply; and
a moving body management server including a second control portion that receives the request notification and controls an operation of a moving body that carries a necessary robot tool at a storage storing the robot tool and transports the robot tool to a work site of the robot.

11. The robot management system according to Claim 10, wherein the moving body is a flying body capable of self-sustaining flying based on identification information of the robot that has transmitted the request notification, position information of the work site of the robot, and type information of the necessary robot tool.

12. The robot management system according to Claim 11, wherein the robot tool has a sensor portion including a camera that captures an image of the target to identify a type of the target, and a motion processing unit that specifies a position of the target, and acquires information required for the flying body to fly in a self-sustaining manner from the sensor portion.

13. A control system of a robot comprising: a determination portion that determines a type of work to be executed on a target; a sensor portion that identifies the target and specifies a position of the target; and a control portion that selects a robot tool necessary for the type of work determined by the determination portion to mount the robot tool on a robot, and causes the robot to execute work corresponding to the type of work on a basis of detection information detected by the sensor portion,
wherein in a case where the type of work determined by the determination portion is special work that requires a predetermined degree of precision in a three-dimensional relative position between the robot tool and the target changing over time from start to end of work,
the control portion acquires common reference information for the robot tool and the target to execute the work while monitoring the relative position between the robot tool and the target changing over time.

14. The control system of a robot according to Claim 13, wherein the sensor portion includes a camera that captures an image of the target to identify a type of the target, and a motion processing unit that specifies a position of the target.

15. The control system of a robot according to Claim 13, wherein the special work is three-dimensional shaping process work, and the reference information is original position information of x-y-z coordinates set in a shaping stage to which a three-dimensional shaping material is supplied.

16. A control system of a robot comprising: a determination portion that determines a type of work to be executed on a target; a sensor portion that identifies the target and specifies a position of the target; and a control portion that selects a robot tool necessary for the type of work determined by the determination portion to mount the robot tool on a robot, and causes the robot to execute work corresponding to the type of work on a basis of detection information detected by the sensor portion,
wherein in a case where the type of work determined by the determination portion is a three-dimensional shaping process using a three-dimensional shaping device, a robot tool having a function of supplying a three-dimensional shaping material as a raw material of the target to a shaping stage is selected as the robot tool, and
the control portion executes the work while monitoring, as common reference information for the robot tool and the target, a relative position between the robot tool and the shaping stage changing over time during a course of the three-dimensional shaping process.

17. A control program of a robot that causes a computer to operate as the determination portion and the control portion according to any one of Claims 13 to 16.

18. A control system of a robot that causes a robot tool necessary for a type of work to be executed on a target to be mounted on a robot and causes the robot to execute work corresponding to the type of work, the system comprising:
a selection portion that selects a robot tool on which a plurality of attribute information detection portions capable of detecting each of a plurality of pieces of attribute information obtainable from the target are mounted;
an attribute information acquisition portion that acquires attribute information of a type with which the target can be identified by the plurality of attribute information detection portions; and
a position specification portion that specifies a position of the target for which the type of work has been designated, by collating the attribute information of the target for which the type of work has been designated with the attribute information acquired by the attribute information acquisition portion.

19. The control system of a robot according to Claim 18, wherein the attribute information acquisition portion acquires
attribute information of a type with which the target can be identified under an environmental condition in which a plurality of the targets are mixed.

20. The control system of a robot according to Claim 18,
wherein the attribute information detection portion
detects attribute information for each of sight, hearing, smell, touch, and taste, and identifies the target by a combination of a plurality of pieces of attribute information.

21. The control system of a robot according to Claim 18, wherein the type of work is picking work of picking designated waste from a housing portion in which a plurality of types of recyclable waste and a plurality of types of harmful waste are mixed.

22. The control system of a robot according to Claim 18, wherein the robot includes a camera that captures an image of the target to identify a type of the target, and a motion processing unit that specifies a position of the target.

23. A control program of a robot that causes a computer to operate as the selection portion, the attribute information acquisition portion, and the position specification portion according to any one of Claims 18 to 22.

24. A control system of a robot comprising: a process control device that can select a robot tool from a plurality of robot tools classified into a plurality of inspection tools for inspecting a state of a target and a plurality of work tools that perform work on the target, and mount the selected robot tool on a robot, and that causes the robot to execute work based on the robot tool,
wherein the process control device includes
an information acquisition portion that acquires information on the target by mounting a robot tool belonging to the inspection tools,
a deciding portion that decides a work process on a basis of the information acquired by the information acquisition portion, and
an execution control portion that replaces the robot tool belonging to the inspection tools with a robot tool belonging to the work tools to execute work in accordance with the work process decided by the deciding portion.

25. The control system of a robot according to Claim 24,
wherein the work is repair work for the target, and the deciding portion specifies a failure site of the target on a basis of the information acquired by the information acquisition portion, analyzes failure information including a failure state, a relationship with past failures, components required for repair, and a repair time, and decides a work process on a basis of the failure information.

26. The control system of a robot according to Claim 24, wherein the robot includes a camera that captures an image of the target to identify a type of the target, and a motion processing unit that specifies a position of the target.

27. A control program of a robot that causes a computer to operate as the information acquisition portion, the deciding portion, and the execution control portion of the process control device according to any one of Claims 24 to 26.

28. A control system of a robot comprising:
a transport control portion that causes a transport device to move between a storage base that stores a target and a plurality of types of tools that can be mounted on a robot and a work space of the robot;
a robot control portion that controls the robot existing in the work space by using a tool mounted on the robot disposed in the work space;
a normal work instruction portion that instructs the transport control portion to move the target using the transport device for a purpose of normal work of the robot on the target by the robot control portion;
an acquisition portion that acquires replacement request information of the tool from the robot control portion; and
an interruption work instruction portion that instructs the transport control portion to transport the tool by interrupting the normal work in a case where the acquisition portion acquires the replacement request information of the tool.

29. The control system of a robot according to Claim 28, wherein the instruction given to the transport control portion by the interruption work instruction portion includes
an instruction to take out the designated tool from the storage base and transport the tool to the work space, and an instruction to transport the tool removed by the robot to the storage base and store the tool.

30. The control system of a robot according to Claim 28, wherein the normal work of the robot on the target in the work space includes unloading work of unloading the target from the storage base and loading work of loading the target into the storage base.

31. The control system of a robot according to Claim 28, wherein the work of the transport device is executed by the robot or another robot in a category of the normal work.

32. The control system of a robot according to Claim 28, wherein the robot includes a camera that captures an image of the target to identify a type of the target, and a motion processing unit that specifies a position of the target, and the robot control portion controls an operation of the robot using information from the motion processing unit as a part of input information.

33. A control program of a robot that causes a computer to operate as the portions of the control system of a robot according to any one of Claims 28 to 32.

34. A robot control system including a gripping portion that is detachably mounted on an arm portion of a robot and attached for a main purpose of gripping a target, one or more robot tools that are configured to be detachable at the arm portion to execute work of a type different from the gripping of the target, a motor for operating the gripping portion and the robot tool, and a drive device for driving the motor, the system comprising:
a determination portion that determines a type of work to be executed on the target; and
a control portion that performs control to mount the gripping portion on the arm portion in a case where the type of work determined by the determination portion is gripping of the target, and to mount a robot tool corresponding to the type of work among the one or more robot tools on the arm portion in a case where the type of work determined by the determination portion is a type of work other than gripping of the target, and controls the drive device in a control mode corresponding to the type of work determined by the determination portion to execute work corresponding to the type of work on the target.

35. The robot control system according to Claim 34,
wherein the control mode includes a high-load work control mode and a precision work control mode, and
the control portion controls the drive device in the high-load work control mode in a case where it is determined that the work to be executed on the target is high-load work, and controls the drive device in the precision work control mode in a case where it is determined that the work to be executed on the target is low-load work.

36. The robot control system according to Claim 34,
wherein the determination portion estimates a work load in a case where the work is executed on the target, and
the control portion controls the drive device in a control mode corresponding to the type of work determined by the determination portion and the work load to execute work corresponding to the type of work on the target.

37. The robot control system according to Claim 36, wherein the determination portion determines, on a basis of information from a sensor portion carried on the gripping portion or the robot tool and including a camera that captures an image of the target to identify a type of the target, and a motion processing unit that specifies a position of the target, a type of work to be executed on the target and a work load in a case where the work is executed.

38. The robot control system according to Claim 34,
wherein the control portion selects any control mode from a position control mode, a speed control mode, or a torque control mode in accordance with the type of work determined by the determination portion to control the drive device.

39. The robot control system according to Claim 34,
wherein the control portion changes a resolution of a pulse signal from a detector that detects a rotation operation of the motor by changing a multiplication number in a case where the pulse signal from the detector is multiplied in the drive device in accordance with the type of work determined by the determination portion, to control the drive device.

40. The robot control system according to Claim 34, wherein the robot tool is mounted on the arm portion instead of the entire gripping portion.

41. The robot control system according to Claim 34, wherein the robot tool is mounted on the arm portion instead of a part of the gripping portion.

42. The robot control system according to Claim 41, wherein the gripping portion includes a plurality of finger portions, and a part of the gripping portion forms tip end portions of the finger portions.

43. A robot control program that causes a computer to operate as the determination portion and the control portion according to any one of Claims 34 to 42.

44. A robot control system for controlling a robot including a gripping portion that is detachably mounted on an arm portion of the robot and attached for a main purpose of gripping a target, and one or more robot tools that are configured to be detachable at the arm portion to execute work of a type different from the gripping of the target, the system comprising:
a determination portion that determines a type of work to be executed on the target;
an acquisition portion that acquires information on a type of work that is about to be executed or being executed by other adjacent robots; and
a control portion that performs control so that the type of work determined by the determination portion is not executed on the target in a case where it is determined that the type of work determined by the determination portion is a type of work that cannot be executed adjacent to the type of work of other adjacent robots acquired by the acquisition portion.

45. The robot control system according to Claim 44,
wherein the control portion performs control so that a type of work other than the type of work determined by the determination portion is executed on the target in a case where it is determined that the type of work determined by the determination portion is a type of work that cannot be executed adjacent to the type of work of other adjacent robots acquired by the acquisition portion.

46. The robot control system according to Claim 44,
wherein in a case where it is determined that the type of work determined by the determination portion is a type of work that cannot be executed adjacent to the type of work of other adjacent robots acquired by the acquisition portion, the control portion moves the robot from a current position so that the type of work of other adjacent robots and the type of work to be executed by the robot are not a combination of the types of work that cannot be executed adjacent to each other.

47. The robot control system according to Claim 44, wherein a combination of types of work that cannot be simultaneously executed by two adjacent robots is set on a basis of sizes of work ranges of the types of work.

48. The robot control system according to Claim 44, wherein a combination of types of work that cannot be simultaneously executed by two adjacent robots is set on a basis of safety reason.

49. The robot control system according to Claim 44, wherein information on a combination of types of work that cannot be simultaneously executed by two adjacent robots is stored in each of a plurality of robots.

50. The robot control system according to Claim 44,
wherein information on a combination of types of work that cannot be simultaneously executed by two adjacent robots is stored in a management server that manages operations of a plurality of robots, and
the management server controls the operations of the plurality of robots so that two adjacent robots do not execute types of work that cannot be simultaneously executed, respectively.

51. The robot control system according to Claim 44, wherein the robot tool is mounted on the arm portion instead of the entire gripping portion.

52. The robot control system according to Claim 44, wherein the robot tool is mounted on the arm portion instead of a part of the gripping portion.

53. The robot control system according to Claim 52, wherein the gripping portion includes a plurality of finger portions, and a part of the gripping portion forms tip end portions of the finger portions.

54. A robot control program that causes a computer to operate as the determination portion, the acquisition portion, and the control portion according to any one of Claims 44 to 53.
